# EUROPEAN PATENT APPLICATION

(11) **EP 2 060 314 A1**
(43) Date of publication of application: **20.05.2009**
(21) Application number: 08790610.3
(22) Date of filing: 25.06.2008
(51) Int. Cl.: B01D 63/08, B01D 61/18, B01D 69/12, B01D 71/32, B01D 71/36, C02F 1/44

(54) **FLAT-MEMBRANE ELEMENT FOR FILTRATION AND FLAT-MEMBRANE FILTRATION MODULE**

(30) Priority: 03.07.2007 JP 2007175450
(71) Applicant: Sumitomo Electric Fine Polymer, Inc., Sennan-gun, Osaka 590-0458 (JP)
(72) Inventor: MORITA, Toru, Sennan-gun Osaka 590-0458 (JP)
(74) Representative: Cross, Rupert Edward Blount
(86) International application number: PCT/JP2008/061543
(87) International publication number: WO 2009/004962

(57) **Abstract**

A flat sheet membrane element for performing solid-liquid separation by immersion in a liquid to be treated which contains a suspended component includes sheet-shaped filtration membranes disposed opposite to each other with a space for a treated liquid flow path, a support portion for securing the space for the treated liquid flow path, and a peripheral sealing portion for sealing the peripheral edges of the filtration membranes arranged opposite to each other so as to form at least one treated liquid outlet, the filtration membranes including at least expanded PTFE (polytetrafluoroethylene) porous membranes.

## Description

### Technical Field

The present invention relates to a flat sheet membrane element for filtration and a flat sheet membrane filtration module including a plurality of flat sheet membrane elements, particularly which are used in a filtration apparatus for performing solid-liquid separation using an expanded PTFE (polytetrafluoroethylene) porous membrane as a filtration membrane in the environmental conservation field, the medicine/food field, and the like.

### Background Art

A membrane module configured by collecting a plurality of porous membranes for filtration has been provided in a sucking filtration apparatus of an immersion type or a filtration apparatus of an external pressure type and widely used in the field of so-called water purification treatment such as purification of river water and lake water. In recent years, such a membrane module has been utilized for not only the water purification field but also highly polluted water treatment such as secondary treatment and tertiary treatment of sewage and filtration of drainage, industrial waste water, industrial water, and the like.
As a use for highly polluted water treatment, a drainage treatment system by a membrane-isolation activated sludge method using a membrane module is spreading. The membrane-isolation activated sludge method is advantageous in that the volume of an aeration tank can be decreased because the method can be operated under a high concentration of activated sludge, and the installation area can be decreased as compared with a conventional general activated sludge treatment apparatus because of no need for a precipitation tank and a sludge concentration tank. In addition, the membrane-isolation activated sludge method is advantageous in that the quality of treated water can be improved as compared with a conventional method.

However, when treatment of high-turbidity drainage using a filtration apparatus with a membrane module is continued, suspended components contained in treated water deposit on a membrane surface and between membranes, and further membrane clogging occurs, thereby decreasing the permeation flow rate.
In particular, in highly polluted water treatment such as the membrane-isolation activated sludge method, treated water has high viscosity and bio fouling of a membrane occurs due to an adhesive deposit peculiar to biological treatment, and thus suspended components easily deposit on a filtration membrane as compared with filtration in a general drainage system, thereby significantly decreasing the permeation flow rate due to the adhesion of the deposit and clogging. Therefore, in a filtration apparatus using a membrane module, generally, pressurized air is sent during operation to create a drainage flow by air bubbling or the like so that a purification operation (aeration treatment) is performed for separating the deposit and removing the deposit by a mechanical load due to oscillation of the filtration membrane. Further, it is necessary to repeatedly recover the filtration function by a maintenance work of decomposing and washing out the deposit which cannot be removed by the aeration treatment and the deposit clogging the membrane using an aqueous solution of a strong alkali such as sodium hydroxide, an acid such as hydrochloric acid, citric acid, oxalic acid, or the like, or a strong oxidizer such as sodium hypochlorite or the like according to the type of the deposit. In particular, when an unexpected accident such as inflow of drainage with abnormally high turbidity, there is the possibility of causing the need for chemical washing with a higher concentration of chemical.
Therefore, a membrane module and a filtration membrane element constituting the module are demanded to have high filtration performance and have both strength sufficient to resist the mechanical load during a long-term operation and excellent chemical resistance to an oxidizer, an acid, and an alkali.
In particular, in a drainage treatment application, a membrane element and a membrane module in a large-scale sewage treatment plant are generally required to have a product lifetime of 5 years to 10 years and are thus strongly demanded to have both mechanical strength and chemical resistance sufficient to resist the operation of a filtration apparatus for a long period of time exceeding the product lifetime and resist repeated maintenance.

Conventional membrane modules include a hollow-fiber membrane module in which many hollow fibers are collected in a circular shape and disposed, and an end is fixed in an open state with a fixing member to form a collecting portion, a flat sheet membrane module provided with a plurality of flat sheet membrane elements each including a sheet-shaped porous membrane supported by a support plate, and the like.

As the hollow-fiber membrane module, the applicant of the present invention proposes in Japanese Unexamined Patent Application Publication No. 2006-7224 (Patent Document 1) a filtration module prepared by collecting porous double-layer hollow fibers having double layers, each of which includes a support layer composed of a porous expanded PTFE tube and a filtration layer composed of a porous sheet made of a resin selected from PTFE, a polyolefin resin, a polyimide, and a polyvinylidene fluoride resin, the sheet of the filtration layer being integrally wound on the outer surface of the tube of the support layer so that the pores of the support layer and the filtration layer are three-dimensionally communicated with each other.
In addition, as the flat sheet membrane module, there are generally a module using a porous membrane composed of a polyolefin resin such as chlorinated polyethylene, and a module using a porous membrane composed of a polyvinylidene fluoride (PVDF) resin as disclosed in Japanese Unexamined Patent Application Publication No. 2004-182919 (Patent Document 2).

Patent Document 1: Japanese Unexamined Patent Application Publication No. 2006-7224
Patent Document 2: Japanese Unexamined Patent Application Publication No. 2004-182919

### Disclosure of Invention

### Problems to be Solved by the Invention

The hollow-fiber membrane module as disclosed in Patent Document 1 generally has the advantage that the installation area per effective membrane area can be decreased to achieve excellent compactness. However, when the hollow-fiber membrane module is applied to highly polluted drainage, particularly the membrane-isolation activated sludge method, under present conditions, the advantage cannot be sufficiently utilized. In detail, when the hollow-fiber membrane module having a compact configuration in which the gap between adjacent hollow fibers is narrowed is applied to high-turbidity drainage, particularly high-viscosity water to be treated in the membrane-isolation activated sludge method, the flow of the treated water caused by aeration becomes relatively slow, and suspended components easily deposit on a membrane surface and between membranes, thereby significantly decreasing the treatment rate. In particular, in application to the membrane-isolation activated sludge method for high-viscosity water to be treated, the treatment rate is further decreased, thereby causing the need to increase the distance between adjacent hollow fibers. Consequently, the installation area is increased, failing to achieve a compact filtration apparatus.
In addition, the filtration module of Patent Document 1 uses a PTFE-made hollow-fiber membrane and is extremely excellent in chemical resistance and strength, but much time and labor are required for an assembling work of arranging in parallel many fine hollow fibers with proper spaces and it is difficult to form a hollow fiber having a double-layer structure, thereby causing the problem of easily increasing the manufacturing cost of the filtration module.

In contrast, the flat sheet membrane module is configured to have an array of sheet-shaped flat sheet membrane elements and thus has the advantage that a cleaning operation can be effectively performed for the membrane surfaces because aeration is easily performed over the entire surface of the membranes. Also, in the highly polluted water treatment, the installation area per effective membrane area may be the same level as that of the hollow-fiber membrane module as a result of the need for the hollow-fiber membrane module to have a large distance between the hollow fibers in order to secure the treatment rate. Further, the flat sheet membrane module has a large membrane area per part as compared with the hollow-fiber membrane module and thus has the advantage of easy assembling.

However, an existing flat sheet membrane element uses a porous membrane composed of a polyolefin resin or PVDF as in Patent Document 2 and has a problem with durability such as mechanical strength, chemical resistance, and the like.
For example, with respect to mechanical strength, an existing flat member is insufficient in the strength of a filtration membrane, particularly the strength of a filtration membrane in a portion having a filtration function, and thus has the high possibility of a leak trouble due to damage to the membrane when used over a long period of time under a load of aeration of a liquid to be treated which contains a variety of foreign matters. In particular, a filtration membrane made of a PVDF resin is produced by re-solidifying a solution of the PVDF resin in a solvent and thus is very thin and insufficient in mechanical strength in a portion having a filtration function.
On the other hand, with respect to durability to washing chemicals, for example, a polyolefin resin-made filtration membrane is relatively durable to alkalis but lacks durability to an oxidizer and cannot be washed with a strong oxidizer at a high frequency or over a long period of time. Also, a PVDF resin-made filtration membrane has a certain degree of durability to an oxidizer but particularly lacks durability to alkalis, and the membrane is discolored to brownish red to cause deterioration of the material within a short time in association with contact with a strong alkali washing liquid. Therefore, the membrane cannot be used for a long period of time. Further, the durability to an oxidizer at a high concentration is not sufficient.

In this way, a conventional flat sheet membrane module for filtration does not have sufficient chemical resistance to an oxidizer and alkalis and has limitation in washing, and thus a filtration membrane cannot be sufficiently washed over a long period of time. Further, the membrane may be damaged by a flow of foreign matters and the liquid to be treated because of insufficient mechanical strength, and thus in the present situation, the membrane is necessitated to be operated at a low flow rate and to be used for a short time, i.e., to be exchanged within a short period of time.

The present invention has been achieved in consideration of the above-mentioned problems and an object is to provide a flat sheet membrane element for filtration excellent in filtration performance, chemical resistance, and mechanical strength and capable of achieving a stable permeation flow rate over a long period of time, and a filtration module including the flat sheet membrane element.

### Means for Solving the Problems

In order to resolve the problems, the present invention provides a flat sheet membrane element for filtration for performing solid-liquid separation by immersion in a liquid to be treated which contains a suspended component, the membrane element including:
sheet-shaped filtration membranes disposed opposite to each other with a space for a treated liquid flow path;
a support portion for securing the space for the treated liquid flow path; and
a peripheral sealing portion for sealing the peripheral edges of the filtration membranes arranged opposite to each other so as to form at least one treated liquid outlet;
wherein the filtration membranes include at least expanded PTFE (polytetrafluoroethylene) porous membranes.

As described above, in the present invention, the flat sheet membrane element for filtration for performing solid-liquid separation by immersion in a liquid to be treated which contains a highly suspended component, particularly in drainage containing activated sludge, is characterized by being provided with at least expanded PTFE porous membranes as the filtration membranes. By using the expanded PTFE porous membranes as the filtration membranes, durability is extremely excellent, and usefulness can be significantly exhibited in a high-turbidity drainage treatment.

Namely, an expanded PTFE porous membrane is produced through extrusion and expansions steps, and a membrane material having high strength due to a high degree of molecular orientation can be provided. Therefore, a high degree of porosity can be exhibited to achieve high porosity, and thus the filtration membranes have fine pores, a large amount of water permeated, and high performance and also have such excellent durability that no crack or breakage occurs in the filtration membranes even under strong mechanical load in an aeration treatment.
In addition, the expanded PTFE porous membranes have such chemical stability that they are resistant to almost chemicals. Although porous membranes with a large specific surface area are generally easily corroded with a chemical and have low strength as compared with a bulk material, the expanded PTFE porous membranes are inactive to almost all organic and inorganic chemicals such as organic and inorganic acids, alkalis, oxidizers, reducing agents, organic solvents, and the like and are excellent in chemical resistance. Therefore, unlike conventional flat sheet membrane elements, the washing chemical is not limited, and washing of the filtration membranes can be performed over a long period of time by selecting any one of various chemicals according to the type of the deposit, if required, at a high concentration. For example, a high-concentration solution of strong oxidizer, such as an aqueous solution of sodium hypochlorite or hydrogen peroxide solution, can be used for completely dissolving and removing bio fouling and sterilizing, and an aqueous solution of strong alkali, such as sodium hydroxide or the like, can be used for removing an oil component from drainage.
Constituent materials of the membrane element other than the membranes include a frame, a support material, and the like. However, these support members are bulk materials and include a small portion of contact with the treated liquid and the washing chemical during use, and thus corrosion of an internal non-contact portion slowly proceeds, thereby causing no practical problem in many cases. In other words, whether the whole element can be used or not is influenced by the chemical resistance of the membranes with a large specific surface area.

As described above, in the flat sheet membrane element of the present invention using the expanded PTFE porous membranes as the filtration membranes, the suspended solid adhering to the film surfaces can be substantially completely decomposed and cleaned out using a high concentration of oxidizer or alkali which cannot be used in a conventional method, and a strong mechanical load can be applied in an aeration treatment, thereby permitting the recovery of the filtration function near an initial condition. As a result, the life of the flat sheet membrane element can be significantly extended, and a quantity of permeated water can be stably obtained over a long period of time. In addition, the configuration as a flat sheet membrane element can decrease the number of the parts assembled and the number of the assembling steps and can facilitate assembling and washing of the membrane surfaces during the operation, thereby permitting the efficient removal of deposits.

The expanded PTFE porous membrane which forms the filtration membrane may be prepared by uniaxial expansion or biaxial expansion but is preferably prepared by extruding a paste containing a PTFE unsintered powder and a liquid lubricant to form a molded product, biaxially expanding the molded product with a draw ratio of 1.5 times to 10 times in a longitudinal direction and a draw ratio of 2 times to 40 times in the lateral direction, and then sintering the resultant porous membrane. The biaxial expansion can enhance the strength of a fibril skeleton which surrounds pores.
The expanded PTFE porous membrane prepared by this production method can have high porosity while maintaining fine pores and have both a high particle collection efficiency and a high permeation capacity.
In addition, the pore shape and size and the like of the expanded PTFE porous membrane can be easily controlled by changing the expansion conditions and sintering conditions, such as the number of steps, the temperature, the magnification, and the like according to the treated liquid and required performance of filtration of the flat sheet membrane element for filtration. Further, a laminate of porous membranes having different pore diameters can be easily formed, and thus a porous filtration membrane with a high particle collection efficiency, a high porosity, and high performance can be efficiently produced.

The expanded PTFE porous membrane preferably has a mean pore diameter of 0.01 to 5.0 µm. In this range, an optimum range is further present for each liquid quality.
The mean pore diameter is measured with PMI Perm-Porometer (model number CFP-1200A).

Further, the mean maximum length of the fibril skeleton which surrounds pores in the outermost layer of the expanded PTFE porous membrane is preferably 30 µm or less. In particular, when drainage containing activated sludge or drainage containing fine particles is used as the liquid to be treated, the mean maximum length of the fibril skeleton which surrounds pores is more preferably 5 µm or less.
The mean maximum length of the fibril skeleton which surrounds pores in the outermost layer of a membrane surface is determined by measuring, on a SEM image, the maximum distance between two points on the periphery of a pore formed by a resin portion and fibers connected thereto.

According to another index, the expanded PTFE porous membrane preferably has a particle collection efficiency of 90% or more for particles with a particle diameter of 5 µm. In particular, when drainage containing activated sludge or drainage containing fine particles is used as the liquid to be treated, the expanded PTFE porous membrane preferably has a particle collection efficiency of 90% or more for particles with a particle diameter of 0.45 µm.
In addition, the particle collection efficiency is measured by the following method:

The expanded PTFE porous membrane is punched in a circle of 47 mm in diameter and set in a holder, and an aqueous solution containing polystyrene latex homogenous particles (product name, DYNO SPERES SS-052-P, STADEX SC-046-S) (manufactured by JSR Corporation) having a particle diameter of 5.125 µm or 0.458 µm is prepared and filtered with the set expanded PTFE porous membrane at a pressure of 41.2 kPa. The absorbance is measured for the aqueous solution before filtration and the filtrate to determine a ratio of absorbance. The absorbance is measured with an ultraviolet-visible spectrophotometer (manufactured by Shimadzu Seisakusho Ltd., UV-160) at a wavelength of 310 nm (measurement accuracy 1/100).

The average thickness of the expanded PTFE porous membrane is preferably 5 to 200 µm, and the porosity thereof is preferably 40 to 90%.
The average thickness is measured with a dial gauge, and the porosity is measured by the method described in ASTM D792.

The tensile strength of the expanded PTFE porous membrane is preferably 10 N/mm² or more according to the definition of JIS K 7113.
Further, the membrane preferably has such excellent chemical resistance that it is not damaged without decreasing the water permeate flow even after immersion in each of 3% by mass sulfuric acid, a 4% by mass aqueous solution of sodium hydroxide, and an aqueous solution of sodium hypochlorite at an effective chlorine concentration of 10% at a temperature of 50°C for 10 days.

In the filtration membrane of the present invention, the porous membrane which forms fine pores may be made of a single expanded PTFE porous membrane, a laminate of PTFE porous membranes with different specifications such as pore diameters or the like, or a laminate of a PTFE porous membrane and another material porous membrane or a porous material sheet as long as the porous membrane is at least partially made of the expanded PTFE porous membrane.
Also, a filtration membrane prepared by providing a skin layer on a single expanded PTFE porous membrane or the outer surface of a laminate may be used. When the skin layer is provided, the filtration membrane has a configuration including at least two-layer, i.e., the expanded PTFE porous layer composed of the expanded PTFE porous membrane and the skin layer, and the expanded PTFE porous layer can be used as a shape-maintaining layer serving as a support layer for the filtration membrane.

The skin layer can be formed by applying fine particles of PTFE and PFA (tetrafluoroethylene-perfluoroalkoxyvinylether copolymer), FEP (tetrafluoroethylene-hexafluoropropylene copolymer), or the like having chemical resistance and heat resistance which are equivalent to those of PTFE or a solution containing these fine particles on the outer surface of the single expanded PTFE porous membrane or the outer surface of the laminate, followed by sintering.

As another method, (1) a fluorocarbon resin film prepared by molding a fluorocarbon resin mainly composed of PTFE into a cylindrical shape, sintering the molding, and then cutting (rotary cutting (katsuramuki)) from the resultant block is provided. Alternatively, (2) a fluorocarbon resin film prepared by coating a dispersion containing a fluorocarbon resin powder dispersed in a liquid on a heat-resistant substrate, heating the coating to a melting point or more to bond the powder, and then removing the heat-resistant substrate is provided.
Then, the film (1) or (2) may be further stretched to prepare the skin layer, and the skin layer may be laminated on an expanded PTFE substrate to form a two-layer structure membrane.

The expression "mainly composed of PTFE" represents that the PTFE weight ratio is 80% or more and more preferably 90% or more.
Examples of a thermoplastic fluorocarbon resin to be combined include PFA (tetrafluoroethylene-perfluoroalkoxyvinylether copolymer), FEP (tetrafluoroethylene-hexafluoropropylene copolymer), ETFE (ethylene-tetrafluoroethlene copolymer), PCTFE (polychlorotrifluoroethylene), PVDF (polyvinylidene fluoride), and the like. Among these resins, FEP having a relatively low decomposition rate even at the PTFE melting point peak or more (327 °C or more) is preferred, and PFA is more preferred.

The molecular weight of the PTFE is preferably about 1,000,000 to 3,500,000, and the heat of fusion in a third step of a method, which will be described below, is preferably 32 J/g to less than 47.8 J/g and more preferably 32 J/g to 44 J/g, which is an index of the molecular weight. When PTFE having the above-described molecular weight and heat of fusion is used, a porous material having fine pores with a porosity of as high as 30% to 80% and a mean flow pore size of 0.01 µm to 0.05 µm can be produced.

The heat of fusion in the third step is measured using a heat-flux type differential scanning calorimeter (manufactured by Shimadzu Seisakusho Ltd., Heat-Flux Type Differential Scanning Calorimeter, DSC-50) as follows:

First, 10 mg to 20 mg of a sample is collected and, if required, PTFE is sealed in an aluminum cell (it is important to keep PTFE in a free state so that it can shrink and deform as much as possible without breaking the cell or completely breaking the cell). The sample is heated from room temperature to 245 °C at 50 °C/min. Then, the sample is heated to 365 °C at 10 °C/min (first step).

Next, the sample is cooled to 350°C at a rate of -10 °C/min and maintained at 350°C for 5 minutes. Next, the sample is cooled from 350°C to 330°C at a rate of -10 °C/min and from 330°C to 305°C at a rate of -1 °C/min (second step). The quantity of heat generated increases as the molecular weight decreases.

Next, the sample is cooled from 305°C to 245°C at a rate of -50 °C/min. Then, the sample is heated from 245°C to 365°C at a rate of 10 °C/min (third step).

The sampling time is 0.5 sec/number of time.

The quantity of heat absorbed in the first step, the quantity of heat absorbed in the second step, and the quantity of heat absorbed (heat of fusion) in the third step are determined by integration between 303°C and 353°C, 318°C and 309°C, and 296°C and 343°C, respectively.

The skin layer is preferably as thin as possible for increasing the flow rate (increasing the performance), and the method (1) is preferred because a thin layer of about 20 to 50 µm can be produced, and the method (2) is more preferred because a thinner skin layer of about 2 to 20 µm can be produced.

Since such a fluorocarbon resin µm becomes difficult to handle and cannot be expanded as the thickness decreases, an expanded porous film composed of a fluorocarbon resin thin film can be produced by bonding the thin film to a substrate and then expanding the thin film and the substrate at the same time. When an expanded PTFE porous material is previously used as the substrate, a composite material of the substrate and the porous film can be used as it is. In this case, the porous substrate preferably has a porosity of 40% or more and a Gurley second of 30 seconds or less and preferably a porosity of 60% or more and a Gurley second of 15 seconds or less for increasing the flow rate (increasing the performance). The Gurley second is an index for permeability and measured by Oken type Gurley seconds measuring instrument according to JIS P 8117.

The skin layer has a smaller pore diameter than that of the expanded PTFE porous membrane and is capable of removing finer particles than those removed by the single expanded PTFE porous membrane, preventing clogging, and expressing the excellent filtration performance. When the skin layer is provided, the skin layer can be produced to have a small thickness, and thus the thickness is preferably 10 µm or less, particularly 5 µm or less, when the pore diameter is 0.4 µm or less, particularly 0.1 µm or less.
When the skin layer is provided, as described above, the skin layer is disposed on the treated liquid side (outer surface side) so that solid particles to be separated can be prevented from being irreversibly captured in the pores of the skin layer in a stationary state after the initial stage of solid-liquid separation treatment. In addition, the deposit can be easily removed by back washing.

When a laminate of PTFE porous membranes having different pore sizes is used, the filtration membrane preferably includes a laminate of at least two layers including a dense expanded PTFE porous membrane having a smaller pore diameter and a PTFE porous membrane having a larger pore diameter than that of the expanded PTFE porous membrane.
In this case, it is preferred that the expanded PTFE porous membrane having a larger pore diameter is laminated on the inner surface side of the expanded PTFE porous membrane having a smaller pore diameter so as to be used as a support of the expanded PTFE porous membrane having a smaller pore diameter.
When the expanded PTFE porous membrane having a smaller pore diameter is in contact with or bonded to the support member, the treated liquid passing through the expanded PTFE porous membrane in a non-opening portion of the support member does not substantially passes, thereby decreasing the flow rate. On the other hand, when the expanded PTFE porous membrane having a larger pore diameter is laminated on the inner surface side, the entire surface of the expanded PTFE porous membrane having a smaller pore diameter can be used as a permeation membrane, thereby permitting treatment without a decrease in the flow rate.
When expanded PTFE porous membranes having different pore sizes are laminated, a laminate can be easily formed by laminating two types of expanded PTFE porous membranes, preferably expanded PTFE porous membranes in an incompletely sintered state, and integrating the membranes by sintering.

When the treated liquid is an aqueous system, according to demand, a hydrophilic polymer having excellent chemical resistance is preferably fixed on the outer surface of the expanded PTFE porous membrane to enhance the hydrophilicity of the surface.
As a method for enhancing the hydrophilicity of the surface of the expanded PTFE porous membrane, for example, a water insolubilization method can be used, in which polyvinyl alcohol having relatively excellent chemical resistance is crosslinked with dialdehyde in an aqueous solution using an acid catalyst or crosslinked by UV treatment using a proper crosslinking agent. These methods can impart hydrophilicity which is chemically relatively stable.
In another method, an ethylene-vinyl alcohol copolymer is dissolved in IPA (isopropyl alcohol) or the like and then insolubilized on the PTFE porous membrane.
This hydrophilic treatment can decrease bio fouling.

The filtration membranes can be configured by opposing in parallel a pair of two filtration membranes or folding a filtration membrane into two opposing parts as long as the filtration membranes are opposed with a space provided therebetween for passing the treated liquid. Since the expanded PTFE porous membrane has sufficient flexural strength and flexibility, the filtration performance and strength are not impaired even by folding, and the labor of sealing one of the sides of the peripheral edge can be saved, causing an advantage in cost.
The opposing sides of one or two flat sheet membrane sheets are preferably sealed by pressure heating, a laser, or the like.

The sealing may be performed by pressure-heating or laser-heating the expanded PTFE porous membranes at the melting point or more or heat-sealing by fusion of another resin as an adhesive resin, which is interposed between the opposing expanded PTFE porous membranes.
As the other resin used for heat sealing, a fluorocarbon resin, an olefin resin, or the like is preferred, and PFA, FEP, polypropylene, polyethylene, or PTB (polybutylene terephthalate) is preferred as a specific resin component.
The use of a fluorocarbon resin such as PFA or FEP has the advantage of excellent chemical resistance. The use of a polyolefin resin such as polypropylene, polyethylene, or the like has the advantage that heat sealing can be performed at a lower temperature because of the low melting point.
The other resin to be interposed may be formed in a film or a plate, or a fine particle dispersion of the resin may be prepared and applied to a sealing portion.

As described above, in the flat sheet membrane element of the present invention, the space for the treated liquid flow path is secured between the filtration membranes arranged opposite to each other by the support portion.
The shape, the structure, etc. of the support portion are not particularly limited as long as the space for the treated liquid flow path can be secured between the filtration membranes. However, the support portion is preferably composed of at least one support material selected from at least one nonwoven fabric, a perforated sheet, a pleated material having continuing V-shaped bent portions, a net material of a shape in which a plurality of linear portions arranged in parallel toward the treated liquid outlet side are connected in a transverse direction, and a processed plate provided with a plurality of flow path openings communicating with the treated liquid outlet side.
When the support material is interposed between the opposing filtration membranes, a configuration can be made, in which the treated water permeated is communicated to the treated water outlet while the filtration membranes is stably supported.
In order to securely form the flow path, a plurality of support materials may be interposed at a predetermined interval between the inner surfaces of the opposing filtration membranes.
In addition, the support material is preferably fixed to at least a portion of the opposing filtration membranes. However, in a case such as back washing in which the load pressure applied from the treated liquid side is low, the support material may not be fixed.

As the support material, a mesh-shaped net material including a plurality of linear portions arranged in parallel toward the treated liquid outlet side and connected in the transverse direction is preferably used.
In such a net material, the spaces formed between the adjacent linear portions serve as flow paths extending to the treated liquid outlet side, and thus the treated liquid can be securely led to the treated liquid outlet. Therefore, the treated liquid does not stay in the flat sheet membrane element and is smoothly led to the treated liquid outlet, significantly improving the treatment flow rate. As a result, a thin support material can be used, and a large effective filtration membrane area with the same volume can be secured.
As the net material, particularly, a net material including a plurality of linear resins arranged in parallel toward the treated liquid outlet side and connected in the transverse direction with finer resins than the linear resins is preferably used. For example, an extruded net manufactured by Naltex Co., [Naltex (registered trade name)] N04911/05_45PP, N06006/06_45PP-NAT can be preferably used.

The support material is preferably composed of a polyolefin resin, a polyester resin, a fluorocarbon resin, or a metal material coated with a polyolefin resin, which is excellent in chemical resistance and capable of heat fusion. The polyolefin resin is preferably polyethylene or polypropylene, and the fluorocarbon resin is preferably PFA or FEP. In addition, in the case of mild operation conditions, various engineering plastics such as ABS (acrylonitrile-butadiene-styrene) resin, PBT resin, PPS (polyphenylene sulfide) resin, PEEK (polyether-ether ketone), and the like may be used.
In particular, when the flat sheet membrane element for filtration of the present invention is used for drainage treatment using the support portion composed of a nonwoven fabric or a mesh (net), a polyolefin resin having a low melting point, high processability, and low hydrolyzability is preferably used. When a high concentration of ozone with extremely high oxidizing power is used for washing, a fluorocarbon resin is preferably used.

When a nonwoven fabric or net (mesh) made of a polyolefin resin or a heat-fusing fluorocarbon resin or another porous sheet is laminated and integrated as the support material with the expanded PTFE membrane, for example, lamination can be easily performed by heating under pressure using a heat roll or a heat-sealing apparatus. In this case, pressure and heating are applied from the expanded PTFE porous membrane having a higher melting point so that the surface of the net, the nonwoven fabric, or the like is partially melted by heat transferred through the expanded PTFE porous membrane, partially enters the fine pores of the PTFE porous membrane, and is then cooled, realizing a secure seal. The flat sheet membrane element can be produced by the above-described simple work at a low cost.
In addition, the nonwoven fabric, the net, or the other porous sheet may be provided by point bonding without being completely fixed or separately provided.
When the other porous sheet is used, a material having a low flow resistance and a larger pore size is preferably selected because the need for the function as the support.

The support material made of the nonwoven fabric or net, or the other porous sheet may be laminated directly on the expanded PTFE porous membrane as described above or laminated through another porous membrane disposed on the inner surface side of the expanded PTFE porous membrane as long as it is positioned on the inner surface side of the expanded PTFE porous membrane which faces the space.
In such a laminate, the nonwoven fabric or net, or the other porous sheet can stably maintain the planar shape of the filtration membrane provided with the expanded PTFE porous membrane without inhibiting the flow path of the treated liquid.

Further, the support material may be configured to have the force to support the planar shape so that the pair of filtration membranes is supported in a planar form by the support material.
In this configuration, the peripheral edges of the filtration membranes are sealed and fixed instead of being supported by the peripheral frame described below, so that the opposing filtration membranes can be supported by the support material to maintain the filtration membranes in a planar form from inside.

The flat sheet membrane element for filtration of the present invention is provided with the peripheral sealing portion for sealing the peripheral edges of the opposing flat sheet membrane shaped filtration membranes so as to provide at least one treated liquid outlet. Namely, the peripheral edges of the filtration membranes, excluding the treated liquid outlet, are sealed.

The peripheral sealing portion is made of the peripheral frame, and the peripheral edges of the filtration membranes may be fixed to the peripheral frame, leaving the space. In this case, the opposing filtration membranes are fixed to both outer sides of the peripheral frame by heat sealing or bonding.
In this configuration, the treated liquid flow path is supported by both the support material and the peripheral frame, and the peripheral edges of the filtration membranes and the support portion are protected by the peripheral frame, thereby forming the more stable flat sheet membrane element for filtration.

The peripheral frame is preferably made of a resin material such as a polyolefin resin, e.g., polyethylene, polypropylene, or the like, a polyester resin, or a fluorocarbon resin.
Alternatively, a metal material of stainless steel which is previously treated with a primer may be coated with a dispersion of fine particles of the polyolefin resin, the polyester resin, or the fluorocarbon resin and then baked. Like the support material, such a peripheral frame can be heat-sealed with the PTFE membrane material to enhance the adhesion and bonding property with the filtration membranes.

Like the support material, the peripheral frame has a small specific surface area in contact with the liquid as compared with the filtration membranes, and thus, even when made of the polyolefin resin, the peripheral frame is little degraded with various chemicals used for chemical washing and does not decrease the strength of the flat sheet membrane element. However, from the viewpoint of the chemical resistance, the support portion and the peripheral sealing portion are preferably composed of a fluorocarbon resin such as PTFE, PFA, FEP, PVDF, or the like, and particularly preferably composed of FEP or PFA which is easily heat-fused and is excellent in chemical resistance. In the case of mild operation conditions, various engineering plastics such as polyolefin resin, polyester resin, ABS resin, PBT resin, PPS resin, PEEK, and the like may be used.
As described above, from the viewpoint of excellent workability, the peripheral frame may be composed of a metal material coated with the above-described resin material.

Instead of using the peripheral frame, the peripheral edges of the opposing filtration membranes may be sealed by heating under pressure or laser, and then the filtration membranes may be placed on the support material having the planar shape holding force.
In this configuration, the peripheral sealing portion can be formed by simply sealing the peripheral edges of the filtration membranes while maintaining the treated liquid flow path with the support material, thereby facilitating the manufacture of the flat sheet membrane element for filtration and reducing the number of parts. In particular, when the peripheral edge seal of the filtration membranes is desired to be protected, a frame may be provided to cover the seal portion.
Although the sealing method may use either heat or an adhesive, heat sealing is preferred because the elusion of an adhesive component can be prevented in an operation of the filtration apparatus and during washing, particularly during chemical washing treatment.

Alternatively, the edges of a filtration membrane comprising one or two flat sheet membrane sheets may be sealed to form a cylindrical filtration membrane, and frames may be provided on the openings at both ends of the cylindrical membrane. In addition, the peripheral seal portion is preferably configured to be fixed to the periphery of the support material.

In the flat sheet membrane element including the filtration membranes composed of PTFE as a base which is excellent in chemical resistance according to the present invention, the other parts such as the support material, the peripheral frame, and the like are also made of a fluorocarbon resin with excellent chemical resistance so that the whole is composed of a fluorocarbon resin. Therefore, when the element is assembled by heat sealing or the like, an O ring or the like is not required, and thus the element can be applied to almost all chemicals according to the load of the treated liquid and the washing chemical.
Further, in heat-sealing the filtration membranes, the filtration membranes and the frame, or the filtration membranes and the support material, a binder can be used between both materials by applying a film having a melting point equal to or lower than those of the membranes and the members or a dispersion containing particles in order to improve workability and reliability.
On the other hand, the heat sealing work can be performed by applying appropriate pressure and heat for suppressing a change in the porous structure of the porous membranes, but the pressure is preferably released after heating for a predetermined time through a cooling step. This is because if cooling is not preformed, the membranes may partially adhere to a member such as a heater and may be extended. These techniques can finish a PTFE porous membrane having low melt viscosity and low adhesiveness to a filter component with high reliability and little elusion.

According to a second embodiment of the present invention, there is provided a flat sheet membrane filtration module including the flat sheet membrane element for filtration which is disposed with a space and integrally assembled, and characterized being used for filtration of an external pressure type or external pressure sucking filtration of an immersion type.

The flat sheet membrane filtration module of the present invention can be configured to include a plurality of the flat sheet membrane elements for filtration which are arranged in parallel, and a common treated liquid collecting tube disposed above the elements, wherein an end of each of branch tubes branched from the common treated liquid collecting tube is connected to the treated liquid outlet provided on the upper surface of each of the flat sheet membrane elements for filtration arranged in parallel so that the flat sheet membrane elements for filtration arranged in parallel are suspended and supported.
In this configuration, many flat sheet membrane elements for filtration can be disposed, and thus a large effective membrane area can be secured, thereby achieving a large treatment capacity.
In addition, a filtration apparatus including aeration devices disposed between the respective flat sheet membrane elements can be easily configured, and the membrane surfaces can be uniformly washed.

The flat sheet membrane elements for filtration are not necessarily arranged in parallel and can be arranged in a radial form, a helical form, a form in which a flat sheet membrane element forms each side of a polygon, a concentric form, or the like as long as a plurality of the flat sheet membrane elements are arranged with spaces.

The flat sheet membrane module may be configured so that one or both of the end openings of a cylinder or bag-like filtration membrane containing a support material therein are mold-fixed, in an opening state, to a fixing member to form a treated liquid outlet. In this case, preferably, the fixing member serves as a peripheral sealing portion for a plurality of the flat sheet membrane elements for filtration, and the end openings are communicated with the inside of a collecting header and with a collecting tube serving as the treated liquid outlet. In this case, the fixing member and a cap sealed thereto are preferably composed of a polyolefin resin or a fluorocarbon resin, but another resin, e.g., an epoxy resin or urethane resin, may be used, according to operation conditions (particularly, washing conditions), and an ABS resin may be used for a sleeve and a cap disposed in the peripheries.
In this configuration, one treated liquid outlet is provided for a plurality of the flat sheet membrane elements, and a treated liquid outlet need not be provided for each of the flat sheet membrane elements, thereby simplifying and facilitating the manufacture of the flat sheet membrane filtration module.
When the flat sheet membrane filtration module is configured to include a plurality of the flat sheet membrane elements, the mesh may be provided between the adjacent cylinder- or bag-like filtration membranes, or if required, provided in contact with the outer peripheries thereof so that the flat sheet membrane elements are disposed without spaces. When the mesh is provided as described above, bending of the filtration membranes can be prevented in back washing.

The flat sheet membrane filtration module of the present invention is very excellent in chemical resistance and mechanical strength and thus can be preferably used for drainage containing activated sludge as a liquid to be treated.
In particular, the flat sheet membrane filtration module is very excellent in that it can be stably used for activated sludge (liquid to be treated) containing 5,000 to 20,000 mg/L of MLSS (Mixed Liquor Suspended Solids). Advantages

As described above, the flat sheet membrane element for filtration of the present invention uses a flat sheet membrane sheet composed of at least an expanded PTFE porous membrane as a filtration membrane and is thus excellent in filtration performance and very excellent in chemical resistance and mechanical strength. Therefore, when the element must be used for filtration of highly polluted drainage with high turbidity, particularly drainage containing activated sludge, particularly activated sludge with 5,000 to 20,000 mg/L of MLSS, for a long period of time or when drainage of a closed sea area or city sewerage contains oil, bio fouling, inorganic substances such as silica, oil, and the like can be washed out with a high concentration of oxidizer or a high alkali chemical which cannot be used in a conventional element, and a mechanical load can be applied in an aeration operation. As a result, the element can be repeatedly used by recovering the filtration function, and a stable permeation flow rate can be achieved over a long period of time.
The configuration as a flat sheet membrane element can reduce the number of the parts assembled and the number of steps, can facilitate assembly and washing of membrane surfaces during operation, and permits the efficient removal of deposits.

### Brief Description of Drawings

[Fig. 1] Figure 1 shows a flat sheet membrane element according to a first embodiment, Fig. 1(A) being a schematic perspective view of the flat sheet membrane element, and Fig. 1(B) being a sectional view taken along line A-A in Fig. 1(A).
[Fig. 2] Figure 2 is a drawing illustrating the structure of the flat sheet membrane element of the first embodiment.
[Fig. 3] Figure 3 is an enlarged schematic drawing illustrating the structure of a filtration membrane of the first embodiment.
[Fig. 4] Figure 4 is a drawing showing a flat sheet membrane filtration module using the flat sheet membrane element according to the first embodiment.
[Fig. 5] Figure 5 is a drawing showing a filtration apparatus using the flat sheet membrane filtration module shown in Fig. 4.
[Fig. 6] Figure 6 is a graph showing the pure water flow rates after an acid resistance/alkali resistance test in an example and a comparative example.
[Fig. 7] Figure 7 is an enlarged schematic drawing showing the configuration of a filtration membrane of a first modified example of the flat sheet membrane element of the first embodiment.
[Fig. 8] Figure 8 shows a second modified example of the flat sheet membrane element of the first embodiment, Fig. 8(A) being a schematic sectional view, and Fig. 8(B) being an enlarged view of a principal portion.
[Fig. 9] Figures 9(A) and 9(B) are drawings showing a third modified example of the flat sheet membrane element of the first embodiment.
[Fig. 10] Figure 10 shows a fourth modified example of the flat sheet membrane element of the first embodiment, Fig. 10(A) being a schematic perspective view illustrating a structure of a flat sheet membrane element, and Fig. 10(B) being a sectional view of the flat sheet membrane element.
[Fig. 11] Figure 11 shows a flat sheet membrane element according to a second embodiment, Fig. 11(A) being a schematic perspective view, Fig. 11(B) being a view showing a comb-like support plate shown in Fig. 11(A), and Fig. 11(C) being an enlarged sectional view of a principal portion taken along line B-B in Fig. 11(A).
[Fig. 12] Figure 12 shows a flat sheet membrane element according to a third embodiment, Fig. 12(A) being a perspective view, and Fig. 12(B) being a sectional view.
[Fig. 13] Figure 13 shows a flat sheet membrane element according to a fourth embodiment, Fig. 13(A) being an exploded perspective view, and Fig. 13(B) being a sectional view of an assembly state.
[Fig. 14] Figure 14 shows a flat sheet membrane filtration module according to a second embodiment, Fig. 14(A) being a schematic perspective view, and Fig. 14(B) being a plan view.
[Fig. 15] Figure 15 shows a flat sheet membrane filtration module according to a third embodiment, Fig. 15(A) being a perspective view, Fig. 15(B) being a sectional view taken along line C-C in Fig. 15(A), and Fig. 15(C) being a partial vertical sectional view of Fig. 15(A).
[Fig. 16] Figure 16(A) is a drawing showing a support material of the third embodiment, and Figure 16(B) is a perspective view showing a cylindrical filtration membrane of the third embodiment.
[Fig. 17] Figures 17(A), (B), and (C) are sectional views showing modified examples of a cylindrical filtration membrane.
[Fig. 18] Figure 18 shows a flat sheet membrane filtration module according to a fourth embodiment, Fig. 18(A) being a perspective view, and Fig. 18(B) being a sectional view taken along line D-D in Fig. 18(A).
[Fig. 19] Figure 19 shows a flat sheet membrane filtration module according to a fifth embodiment, Fig. 19(A) being a drawing of the whole arrangement, and Fig. 19(B) being a side view of the flat sheet membrane filtration module.
[Fig. 20] Figure 20 shows a flat sheet membrane filtration module according to a sixth embodiment, Fig. 20(A) being a drawing of the whole arrangement, and Fig. 20(B) being a side view of the flat sheet membrane filtration module.

### Reference Numerals

- 10, 20, 30: flat sheet membrane element
- 11, 21, 31: filtration membrane
- 12: support plate
- 13: peripheral frame
- 14: treated liquid outlet
- 15: expanded PTFE porous membrane
- 16: expanded PTFE porous sheet
- 18: nonwoven fabric
- 60, 70, 80: flat sheet membrane filtration module
- 71: net material
- 81: common treated liquid collecting tube
- 82: branch tube
- 90: skin layer
- 100: filtration apparatus

### Best Mode for Carrying Out the Invention

Embodiments of the present invention are described below with reference to the drawings.

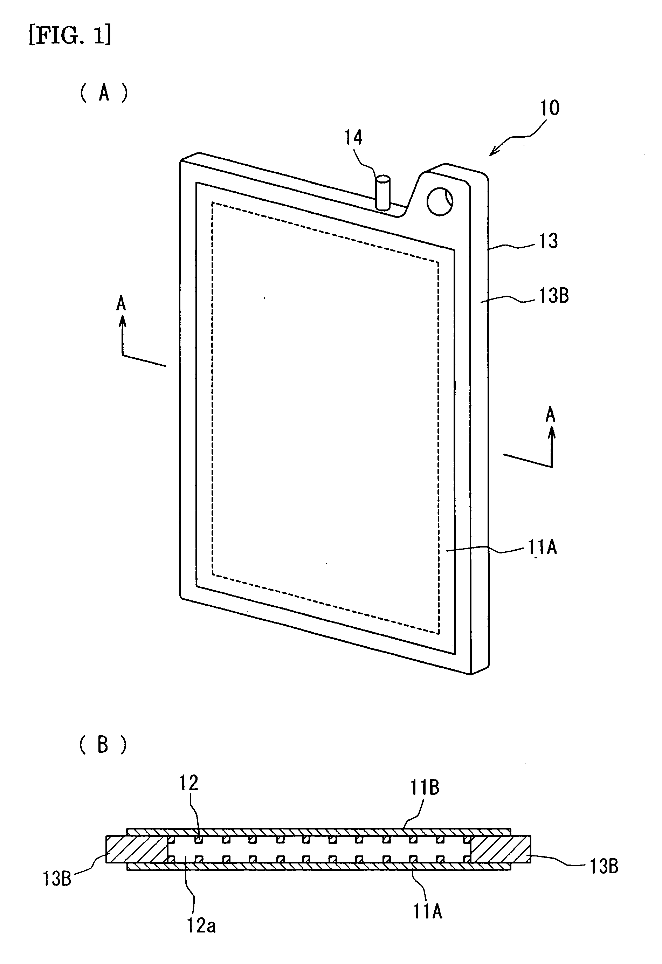

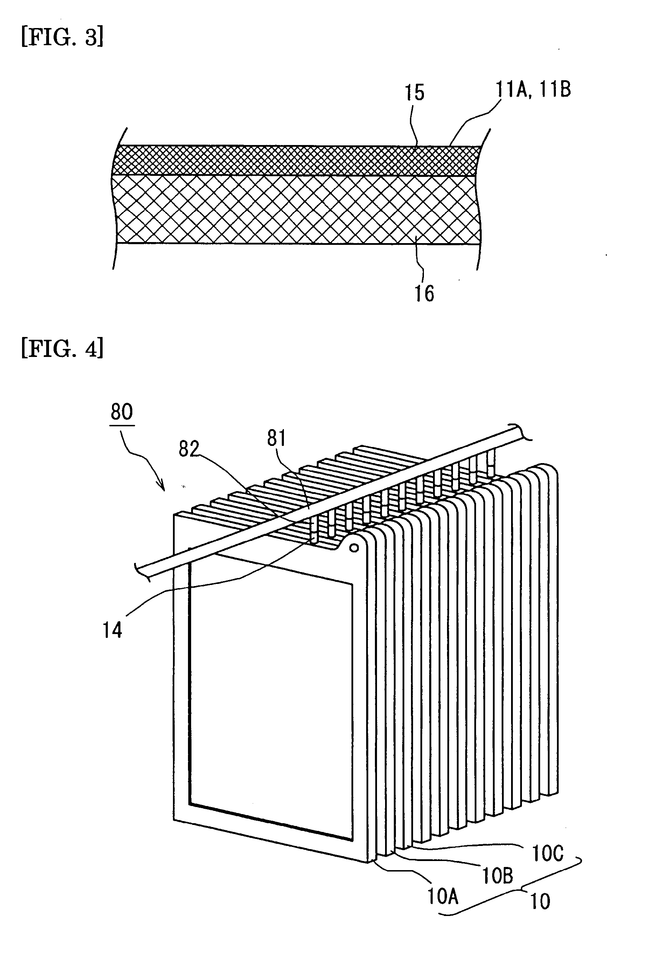

Figures 1 to 3 show a flat sheet membrane element 10 for filtration according to a first embodiment, and Figs. 4 to 6 show a flat sheet membrane filtration module 80 including the flat sheet membrane element 10 according to the first embodiment.
The flat sheet membrane filtration module 80 is immersed in a liquid to be treated which contains high-turbidity suspended components, for performing solid-liquid separation, and is immersed in an aeration tank containing sewage and activated sludge to be used for a membrane-isolation activated sludge method.

The flat sheet membrane element 10 includes two rectangular sheet-shaped filtration membranes 11A and 11B which are opposed to each other, a polyethylene resin-made support plate 12 which supports the filtration membranes 11A and 11B with a space for a treated liquid flow path provided therebetween, and a polyethylene resin-made peripheral frame 13 having a treated liquid outlet 14 provided in the upper surface thereof.

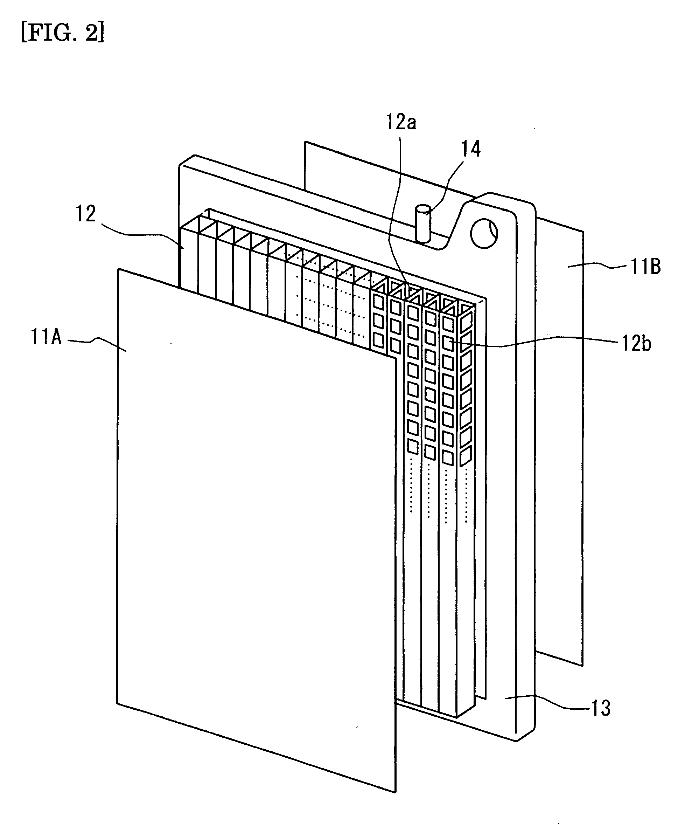

As shown in Fig. 2, the flat sheet membrane element 10 is formed by engaging the support plate 12 in the opening of the peripheral frame 13 and integrated by heat bonding or adhesive bonding, and then heat-sealing the peripheral edges of the filtration membranes 11A and 11B with the peripheral frame 13 to which the support plate 12 has been integrated, and the peripheral edges of the filtration membranes 11A and 11B are sealed to form a treated liquid outlet.
The peripheral edges of the filtration membranes 11A and 11B are heat-sealed with the peripheral frame 13 by heating the filtration membranes 11A and 11B composed of expanded PTFE porous membranes with a high melting point at a temperature higher than the melting point of the polyethylene resin which constitutes the peripheral frame so that the surface of the peripheral frame 13 is partially melted by heat transferred through the expanded PTFE porous membrane side and solidified by cooling. In this configuration, the flat sheet membrane element in which the bond portion between the frame and the filtration membranes is strengthened can be manufactured while suppressing the cost by a simple work.
In this embodiment, both surfaces of the support plate 12 are made free without being fixed to the filtration membranes 11A and 11B.

The support plate 12 has many flow path openings 12a which are communicated with the treated liquid outlet 14 side and many through holes 12b in each of the surfaces facing the filtration membranes 11A and 11B so that the treated liquid permeated through the filtration membranes 11A and 11B smoothly flows into the support plate 12 and reaches the treated liquid outlet 14.

Fig. 3 is an enlarged schematic view illustrating the configuration of the filtration membranes 11A and 11B used in the flat sheet membrane element 10 of the first embodiment.
Each of the filtration membranes 11A and 11B is composed of a laminate of an expanded PTFE porous membrane 15 and an expanded PTFE porous membrane 16 having a larger pore diameter and a larger thickness than those of the expanded PTFE porous membrane 15.
Each of the filtration membranes 11A and 11B is produced by laminating the expanded PTFE porous membrane 15 which is prepared by biaxially expanding a molding obtained by paste-extrusion of a PTFE unsintered powder and a liquid lubricant, and the expanded PTFE porous membrane 16 prepared by the same method and having a larger pore size than that of the expanded PTFE porous membrane 15, following by sintering integration.

The expanded PTFE porous membrane 15 used has, in a single membrane state without being laminated with the expanded PTFE porous membrane 16, a mean pore diameter of 0.01 to 0.45 µm, a mean thickness of 5 to 200 µm, a mean maximum length of 5 µm or less in a fibril skeleton surrounding pores, and a particle collection efficiency of 90% or more for a particle diameter of 0.45 µm.
On the other hand, the expanded PTFE porous membrane 16 used has, in a single membrane state without being laminated with the expanded PTFE porous membrane 15, a mean pore diameter of 1 to 15 µm, a mean thickness of 5 to 195 µm, and a mean maximum length of 15 to 100 µm in a fibril skeleton surrounding pores.
Further, the laminate of the expanded PTFE porous membrane 15 and the expanded PTFE porous membrane 16 has a tensile strength of 10 N/mm² or more and such excellent chemical resistance that it is not damaged without decreasing the water permeate flow even after immersion in each of 3% by mass sulfuric acid, a 4% by mass aqueous solution of sodium hydroxide, and an aqueous solution of sodium hypochlorite at an effective chlorine concentration of 10% at a temperature of 50°C for 10 days.

In the flat sheet membrane element 10, the filtration membranes 11A and 11B are arranged so that the expanded PTFE porous membranes 15 having a smaller pore diameter are disposed on the outer sides serving as the treated liquid sides.
In this way, the expanded PTFE porous membranes 15 having a smaller pore size are disposed on the outer sides serving as the treated liquid sides so as to prevent solid particles to be isolated from being irreversibly captured in the pores of the expanded PTFE porous membranes 15 in a stationary state after the initial stage of a solid-liquid separation treatment.
In addition, the surfaces of the filtration membranes 11A and 11B each composed of the laminate of the expanded PTFE porous membrane 15 and the expanded PTFE porous membrane 16 are subjected to hydrophilic treatment with crosslinked PVA. The hydrophilic treatment facilitates contact of the liquid to be treated and can decrease bio fouling and the like.

In the flat sheet membrane element for filtration with the above configuration, each of the filtration membranes is formed by laminating the expanded PTFE porous membranes having different pore sizes, the flat sheet membrane element is not only excellent in filtration performance but also very excellent in chemical resistance and strength and thus can be washed with a high concentration of oxidizer or an alkali agent, thereby achieving a large water permeate flow over a long period of time.

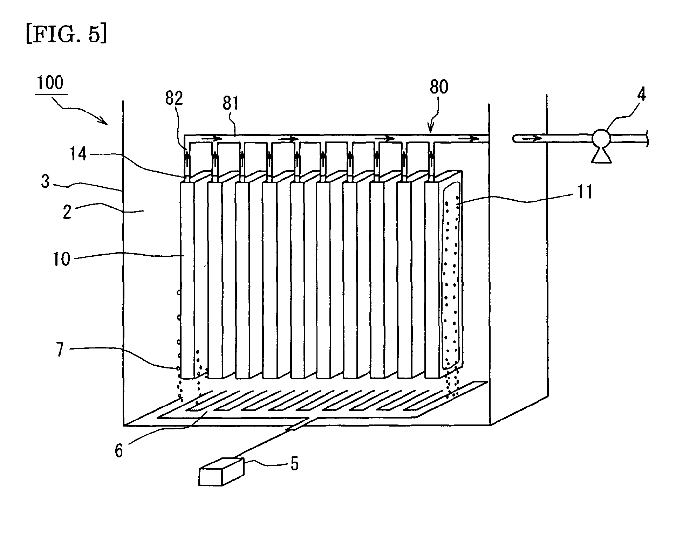

Figures 4 and 5 show a flat sheet membrane filtration module 80 according to a first embodiment which includes the flat sheet membrane element 10 of the first embodiment.
The flat sheet membrane filtration module 80 is used for external pressure sucking filtration of an immersion type.
As shown in Fig. 5, the flat sheet membrane elements 10 of the first embodiment are arranged in parallel and a common treated liquid collecting tube 81 is disposed above the flat sheet membrane elements 10. In addition, ends of branch tubes 82 branched from the common treated liquid collecting tube 81 are connected to the treated liquid outlets 14 provided on the upper surfaces of the flat sheet membrane elements 10 arranged in parallel so as to suspend and support the flat sheet membrane elements 10 arranged in parallel.
In this way, the flat sheet membrane filtration module 80 is configured so that the treated liquid outlets 14 of the respective flat sheet membrane elements 10 are individually attached to the branch tubes 82, facilitating exchange in units of the flat sheet membrane elements.

The operation of a filtration apparatus 100 provided with the flat sheet membrane filtration module 80 is described.
A liquid 2 to be treated which includes drainage containing activated sludge including treated sewage and introduced and filled in an immersion tank 3 and which has a MLSS (Mixed Liquor Suspended Solids) of 5,000 to 20,000 mg/L is permeated through the filtration membranes 11 of the flat sheet membrane elements 10 by driving a suction pump 4 and subjected to solid-liquid separation, introduced into the common treated liquid collecting tube 81 through the branch tubes 82 connected to the treated liquid outlets 14, and then recovered as a treated liquid.

In order to separate and remove the suspended components depositing on the surfaces of the flat sheet membrane elements 10, air bubbling is performed for the surfaces of the filtration membranes 11 of the flat sheet membrane elements 10.
In detail, a blower 5 is operated to introduce pressurized air into a cleaning pipe 6, and the pressurized air is ejected through gas ejection holes (not shown) of the aeration pipe 6 to generate bubbles 7 which are raised in the axial direction while being in contact with the outer surfaces of the flat sheet membrane elements 10 to strongly separate and remove the suspended components depositing on the surfaces of the flat sheet membrane elements 10. Consequently, membrane filtration can be stably continued.
Air bubbling may be constantly performed or periodically performed.
Although each of the flat sheet membrane elements 10 of this embodiment has one treated liquid outlet 14 so that the whole treated liquid is sucked into an upper portion, two or more treated liquid outlets may be provided as in a flat sheet membrane element 20 of a third embodiment.
In this way, since the flat sheet membrane element of the present invention includes a flat sheet membrane-shaped filtration membrane, air bubbles can be securely applied to the surfaces of the membrane. Further, since the flat sheet membrane element includes an expanded PTFE porous membrane, mechanical strength is excellent, and suspended components can be strongly separated and removed.

### (EXAMPLE)

A flat sheet membrane element was formed by the same method as in the first embodiment except that a single-layer expanded PTFE porous membrane having an average thickness of 7 µm and an average pore size of 0.1 µm was used as a filtration membrane.

### (COMPARATIVE EXAMPLE)

The same method as in Example 1 was performed except that a PVDF membrane laminated on a polyester nonwoven fabric was used as a filtration membrane. The PVDF membrane used had an average thickness of 5 µm and a pore size of 0.1 µm.
In the example and the comparative example, the average thickness and the average pore size were measured by the same methods as described above.

The flat sheet membrane elements of the example and the comparative example were immersed in each of acid, alkali, and oxidizer aqueous solutions to evaluate acid resistance, alkali resistance, and oxidizer resistance.
The acid resistance, alkali resistance, and oxidizer resistance were evaluated by appearance observation measurement described below, and a pure water flow rate described below was measured for the acid resistance, and alkali resistance.

### (Appearance observation)

Each of the flat sheet membrane elements after immersion was washed with water and then visually observed for the acid resistance and alkali resistance and observed through a scanning electron microscope (SEM: 1000 times) for the oxidizer resistance to evaluate the chemical resistance of the filtration membrane. When no change was observed in the filtration membrane, the chemical resistance was evaluated as "○", and when breakage, cracking, or the like was observed, and damage to the filtration membrane was observed, the chemical resistance was evaluated as "×". The results are shown in Table 1.

**[Table 1]**

| | | Example | Comparative Example |
|---|---|---|---|
| Acid resistance (H₂SO₄) 50°C, 10 days | pH1 | ○ | ○ |
| | pH4 | ○ | ○ |
| Alakli resistance (NaOH) 50°C, 10 days | ph11 | ○ | ○ |
| | pH14 (4% by mass) | ○ | × (discolored to red and broken) |
| Oxidizer resistance 50°C, 10 days | 0.5% | ○ | ○ |
| | 2% | ○ | ○ |
| | 5% | ○ | × (cracked) |
| | 10% | ○ | × (cracked) |

### (Pure water flow rate)

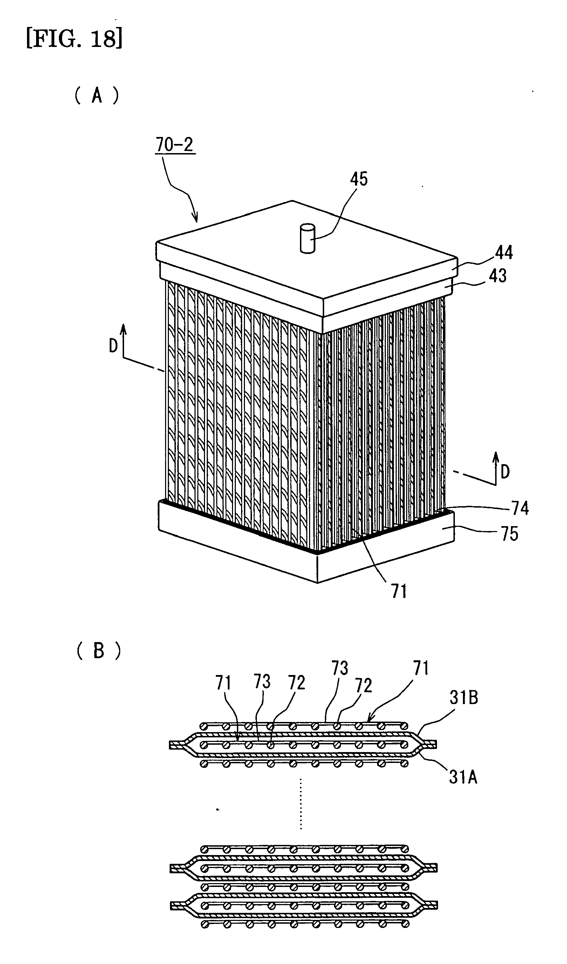

After immersion in each of the acid and alkali aqueous solutions, each of the flat sheet membrane elements was washed with water, and the filtration membrane was taken out and measured with respect to a pure water flow rate. The pure water flow rate was measured under a measurement pressure (suction pressure) of 95 kPa using a circular punched-out product of a sample size of 47 φmm. The results are shown in Fig. 18.

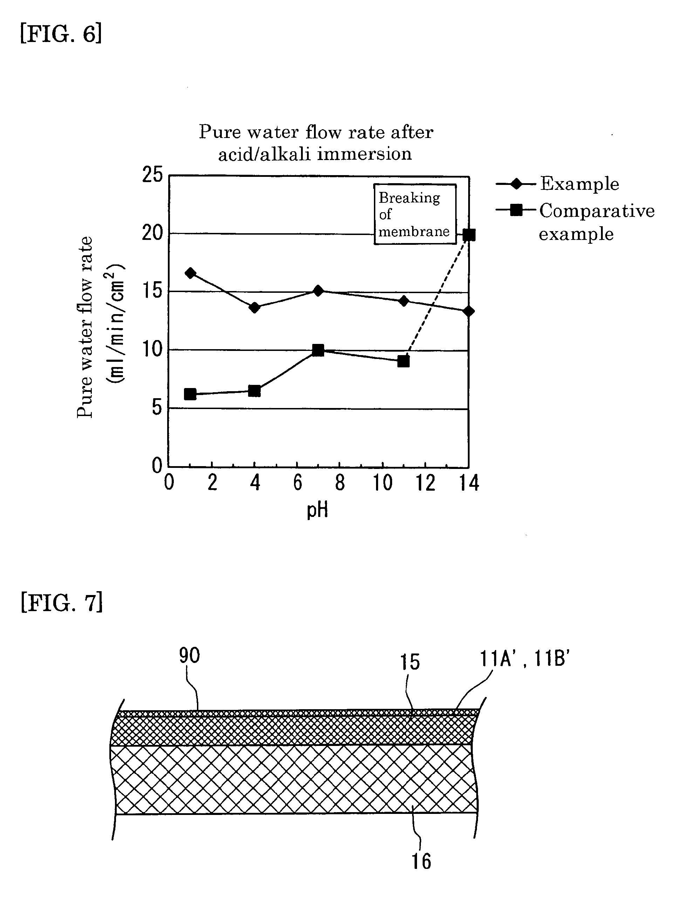

Table 1 shows that in the flat sheet membrane element of the comparative example provided with the PVDF filtration membrane, the filtration membrane was discolored to red and broken at pH 14 and thus was lack of alkali resistance. Also, in immersion in an aqueous solution of sodium hypochlorite at an effective chlorine concentration of 5% or more, the filtration membrane was cracked and lack of the oxidizer resistance. Further, Fig. 6 shows that pin holes occurred in the filtration membrane after an alkali treatment at pH 14, and the pure water flow rate rapidly increased and was made immeasurable.
On the other hand, in the flat sheet membrane element of the example provided with the expanded PTFE porous membrane as the filtration membrane, no damage was observed in the appearance in the evaluation of any one of the acid resistance, the alkali resistance, and the oxidizer resistance, and the pure water flow rate neither significantly decreased nor increased even after the immersion in each of the acid and alkali aqueous solutions, maintaining the filtration performance.
In this way, the flat sheet membrane element of the present invention provided with the expanded PTFE filtration membrane is very excellent in chemical resistance and can maintain the filtration performance after a chemical treatment as compared with a conventional flat sheet membrane element.

Figure 7 shows a flat sheet membrane element for filtration of a first modified example of the first embodiment.
The first modified example is different from the first embodiment in the configuration of the filtration membranes 11A and 11B.
In the first modified example, as shown in Fig. 7, a skin layer 90 is provided as a dense filtration layer on the expanded PTFE porous membrane 15 side of each of the filtration membranes 11A and 11B of the first embodiment, and the skin layer 90 is disposed on the treated liquid side.
The skin layer 90 is prepared by applying, to the expanded PTFE porous membrane 15, a solution containing dispersed fine particles of 90% PTFE and 10% PFA having chemical resistance and heat resistance, which are equivalent to those of PTFE, sintering the coating, and then expanding the membrane to provide fine pores. The sense layer 90 has an average pore size of 0.01 to 0.05 µm and an average thickness of 0.5 to 10 µm, the pore size being smaller than that of the expanded PTFE porous membrane 15. Therefore, 90% or more of fine particles having a diameter of 0.05 µm or more can be removed, and the excellent filtration performance can be exhibited. Since the skin layer 90 is disposed on the treated liquid side, solid particles to be separated are not irreversibly captured in the pores of the filtration membranes 11A and 11B in a stationary state after the initial stage of solid-liquid separation treatment, and clogging can be further prevented as compared with the filtration membrane of the first embodiment.

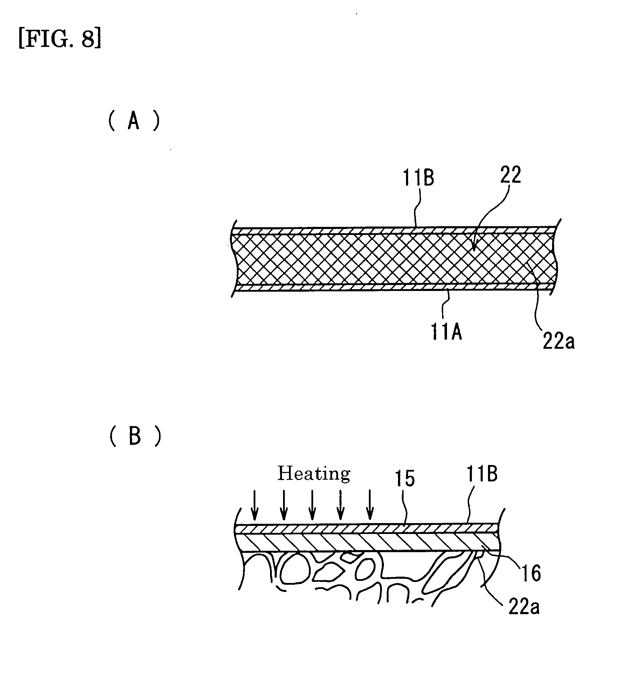

Figure 8 is a schematic sectional view showing a flat sheet membrane element for filtration of a second modified example of the first embodiment.
The second modified example is different from the first embodiment in that a support plate is made of a net 22 and a peripheral frame 13 is composed of stainless steel coated with a PFA resin.
The filtration membranes 11A and 11B and the net 22 are heat-bonded together by heating the filtration membranes 11A and 11B composed of the expanded PTFE porous membranes and having a high meting point at a temperature of 300 to 500 °C to partially fuse the surfaces of the net 22 by the heat transferred through the filtration membranes, and then solidifying by cooling. The PFA fibers 22a constituting the net 22 partially enter the pores of the expanded PTFE porous membranes 15 due to fusion, and then cooled to securely bond together the filtration membranes 11A and 11B and the net 22. However, the fused fibers 22a of the net 22 partially enter the pores of the PTFE porous sheets 16 with a larger pore side among the filtration membranes, but do not reach the expanded PTFE porous membranes 15 having a smaller pore size. Therefore, the net 22 and the filtration membranes 11A and 11B can be integrated without decreasing the filtration performance. In this configuration, the net 22 can stably support the filtration membranes 11A and 11B while securing the treated liquid flow path together with the peripheral frame 13.
In this modified example, the filtration membranes 11A and 11B are heat-sealed with the peripheral frame 13, but the heat sealing temperature is higher than the melting points of the materials because of the high melting points of the materials.

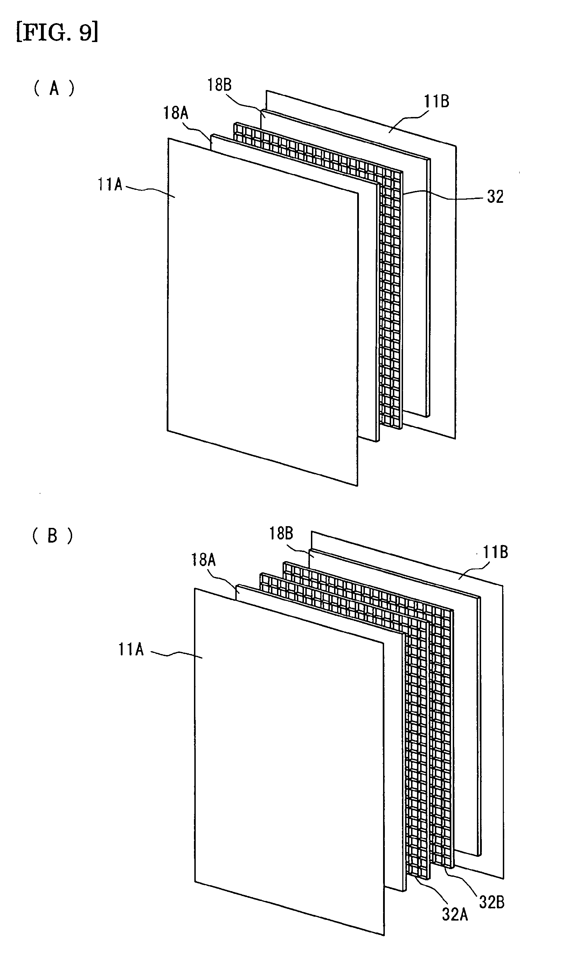

Figure 9 shows a flat sheet membrane element for filtration of a third modified example of the first embodiment.
The third modified example uses a rigid polyethylene-coated metal mesh 32 instead of the support plate 12 of the first embodiment. The polyethylene-coated metal mesh 32 is formed by impregnating, with a melted polyethylene resin, a stainless steel mesh which is previously surface-treated.
Like the support plate 12 shown in Fig. 2, the polyethylene-coated metal mesh 32 is engaged in a peripheral frame (not shown) and integrated with the peripheral frame by heat sealing.
In this modified example, nonwoven fabrics 18A and 18B are interposed between the filtration membranes 11A and 11B and the polyethylene-coated metal mesh 32 and also engaged in the opening of the peripheral frame (not shown), and then filtration membranes 11A and 11B are heat-sealed with the peripheral frame.
In this configuration, the polyethylene-coated metal mesh 32 and the nonwoven fabrics 18A and 18B can secure a treated liquid flow path while stably supporting the filtration membranes 11A and 11B. Since the nonwoven fabrics 18A and 18B serve as cushion materials between the filtration membranes 11A and 11B and the polyethylene-coated metal mesh 32, the filtration membranes 11A and 11B can be softly supported.
Although, in this modified example, the nonwoven fabrics 18A and 18B are not fixed to the filtration membranes 11A and 11B and the polyethylene-coated metal mesh 32, the nonwoven fabrics 18A and 18B may be fixed to any one or both the filtration membranes 11A and 11B and the polyethylene-coated metal mesh 32.
Further, in order to further smooth the flow of the treated water, as shown in Fig. 9(B), two polyethylene-coated metal meshes 32A and 32B may be provided with a proper space therebetween so as to be disposed between the filtration membrane 11A and the nonwoven fabric 18A and the nonwoven fabric 18B and the filtration membrane 11B.

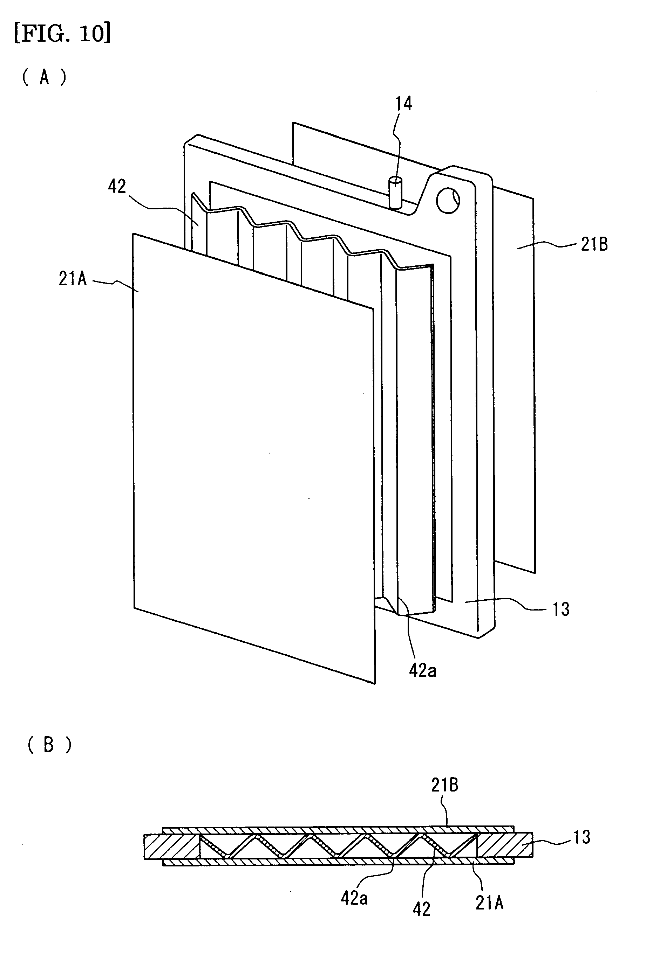

Figure 10 shows a flat sheet membrane element for filtration of a fourth modified example of the first embodiment.
In this modified example, a pleated support plate 42 including continuing V-shaped bent portions made of polypropylene and having rigidity is used as a support material, and, like in the first embodiment, the peripheral edge of the pleated support plate 42 is engaged in the opening of the peripheral frame 13 and bonded thereto by heat sealing or adhesive bonding. In addition, filtration membranes 21A and 21B each including a thin propylene nonwoven fabric (not shown) having a thickness of 0.05 to 5 mm and laminated on the expanded PTFE sheet side having a larger pore size are used as filtration membranes. The nonwoven fabrics of the filtration membranes 21A and 21B are heat-sealed with the peaks 42a of the pleated support plate 42. The peripheral edges of the filtration membranes 21A and 21B are heat-sealed to the peripheral frame 13 to seal the periphery.
In this configuration, the pleated support plate 42 can secure flow paths to a treated liquid outlet 14.

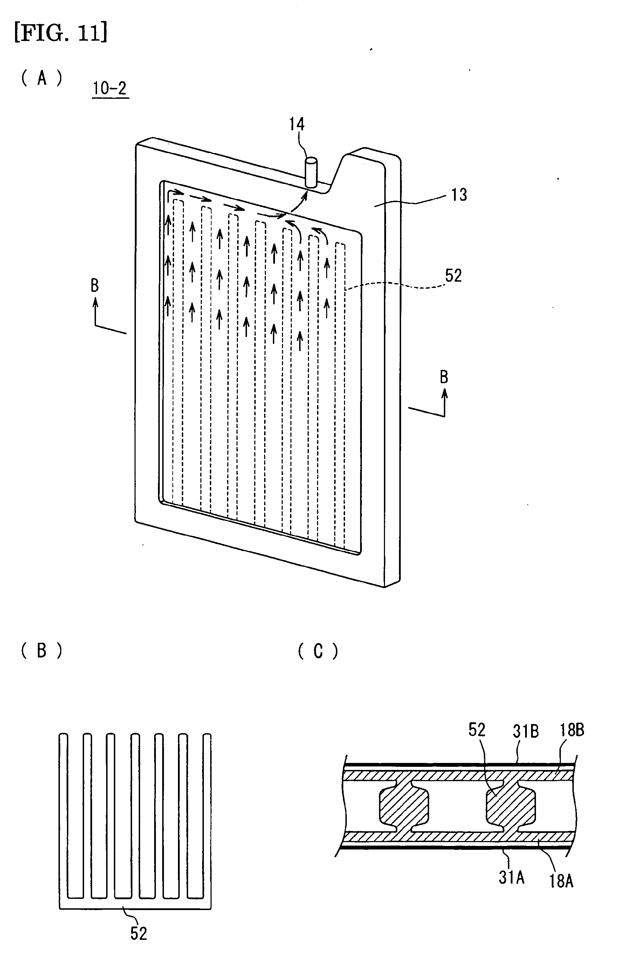

Figure 11 shows a flat sheet membrane element 10-2 for filtration according to a second embodiment.
The flat sheet membrane element 10-2 includes rectangular flat sheet membrane-shaped filtration membranes 31A and 31B arranged opposite to each other, and a polypropylene comb-like support plate 52 which supports the filtration membranes 31A and 31B while securing spaces for treated liquid flow paths, the peripheral edges of the filtration membranes 31A and 31B and the comb-like support plate 52 being buried in the peripheral frame 13 to leave the spaces as treated liquid flow paths.
In addition, the treated liquid outlet 14 is provided on the top of the peripheral frame 13, and the peripheral edge is sealed with the peripheral frame 13 excluding the treated liquid outlet 14.

The filtration membranes 31A and 31B each include a single-layer expanded PTFE porous membrane, and nonwoven fabrics 18A and 18B composed of polypropylene fibers are interposed between the comb-like support plate 52 and the filtration membranes 31A and 31B. As shown in Fig. 11(C), the nonwoven fabrics 18A and 18B are integrated with both surfaces of the comb-like support plate 52 by heat-sealing. In this configuration, the comb-like support plate 42 can secure flow paths to the treated liquid outlet 14 as shown by arrows in Fig. 11(A).
The other configuration and operations and advantages are the same as in the first embodiment, and thus the same reference numerals are given to omit description.

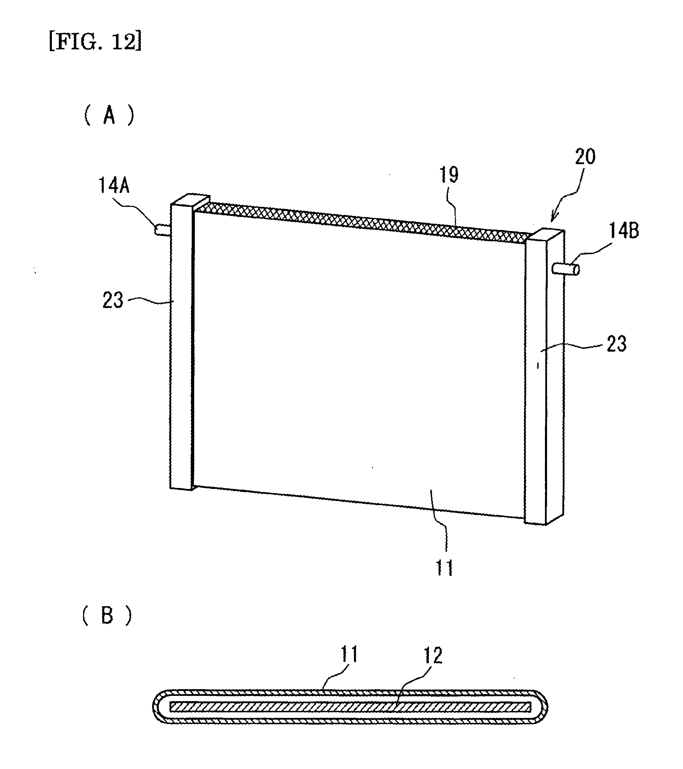

Figures 12(A) and (B) show a flat sheet membrane element 20 for filtration according to a third embodiment.
The flat sheet membrane element 20 of the third embodiment has a horizontally long shape and is formed by winding a filtration membrane 11 composed of a flat sheet membrane sheet on the same support plate 12 as in the first embodiment, which is turned sideways, and then heat-sealing the winding start and end in a seal portion 19 at the top of the flat sheet membrane element 20 to form a cylindrical shape. In addition, both side frames 23 are attached to the right and left side openings of the filtration membrane 11 by heat-sealing, bonding, or the like and sealed leaving treated liquid outlets 14A and 14B. When the frames 23 are made of a material such as a polyolefin resin or a heat-fusing fluorocarbon resin, heat sealing is performed, while when the frames are made of a material such as an ABS resin, adhesive sealing is performed with an urethane resin, an epoxy resin, or the like.
Even when the frames are provided on both sides as in this embodiment, the filtration membrane 11 can be supported in a planar form because the support plate 12 has the planar shape holding force.
The other configuration and operations and advantages are the same as in the first embodiment, and thus the same reference numerals are given to omit description.

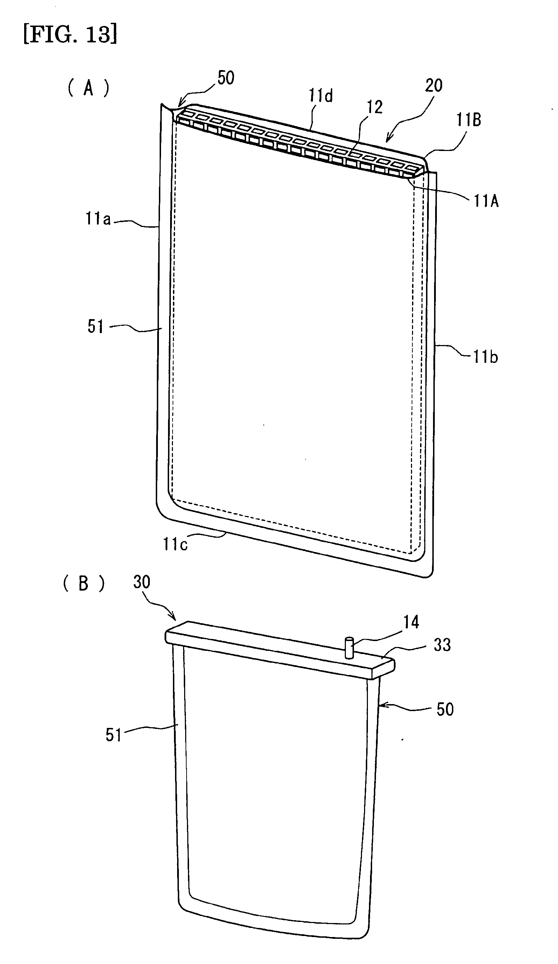

Figures 13(A) and (B) show a flat sheet membrane element 30 for filtration according to a fourth embodiment.
In the fourth embodiment, as shown in Fig. 13(A), two rectangular filtration membranes 11A and 11B are arranged opposite to each other, and the right and left edges 11a and 11b and the bottom edges 11c of the filtration membranes are sealed by heating sealing to form a bag-like filtration membrane 50. Next, the bag-like filtration membrane 50 is placed on the same support plate 12 as in the first embodiment. The peripheral seal portion 51 is not fixed to the periphery of the support plate 12.
The upper opening 11d not heat-sealed is sealed in an open state with a frame 33 having a treated liquid outlet 14. As a sealing method, when the material of the frame 33 is an olefin resin or a heat-fusing fluorocarbon resin, heat sealing is preferred, while when the material of the frame 33 is an ABS rein resin, bonding with an urethane resin, an epoxy resin, or the like is preferred.
In this configuration, the support plate 12 can support the bag-like filtration membrane 50 in a planar form because the support plate 12 has the planar shape holding force.
Although, in this embodiment, the peripheral seal portion is not fixed to the support plate 12, the seal portion may be fixed.
The other configuration and operations and advantages are the same as in the first embodiment, and thus the same reference numerals are given to omit description.

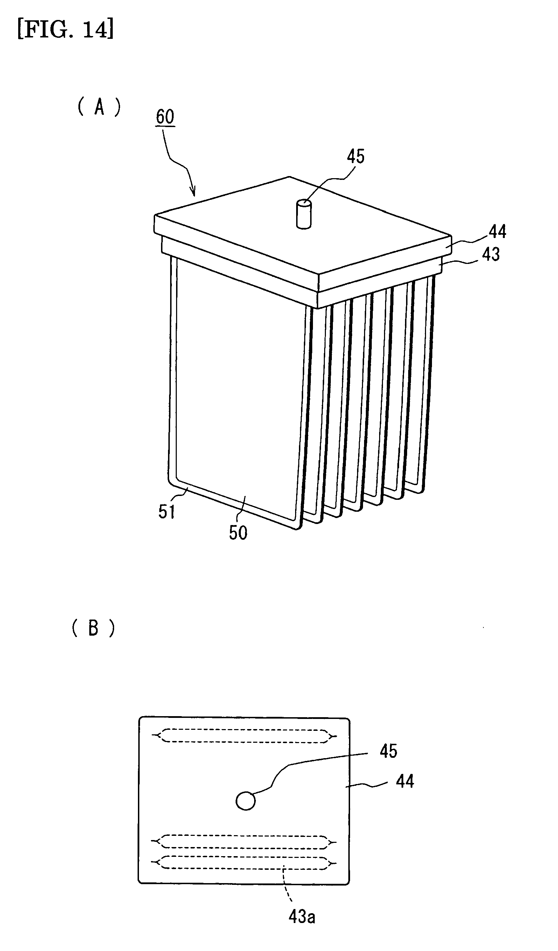

Figures 14(A) and (B) show a flat sheet membrane filtration module according to a second embodiment.
A flat sheet membrane filtration module 60 of the second embodiment includes a fixing member 43 which is formed by molding the upper openings 11d of a plurality of bag-like filtration membranes 50 with a resin and positioning and fixing the upper openings 11d instead of the frame 33 shown in Fig. 13.
The fixing member 43 is prepared by forming, in a heat-fusing plastic material such as a polypropylene resin, a polyethylene resin, or the like, grooves 43a corresponding to the shapes of the upper openings 11d of the bag-like filtration membranes 50 as shown in Fig. 14(B) and placing the upper openings 11d in the grooves 43a, followed by heat fusion. The upper openings 11d of the bag-like filtration membranes 50, which are supported by the fixing member 43, are communicated with the inside of a collecting header 44, and the collecting header 44 is communicated with a collecting tube 45.
In this configuration, the openings of a plurality of flat sheet membrane elements can be sealed with a fixing member, and thus a flat sheet membrane filtration module can be easily formed. The flat sheet membrane filtration module may be an immersion type or may be arranged in a pressure vessel to be used as a filtration module of an external pressure type.

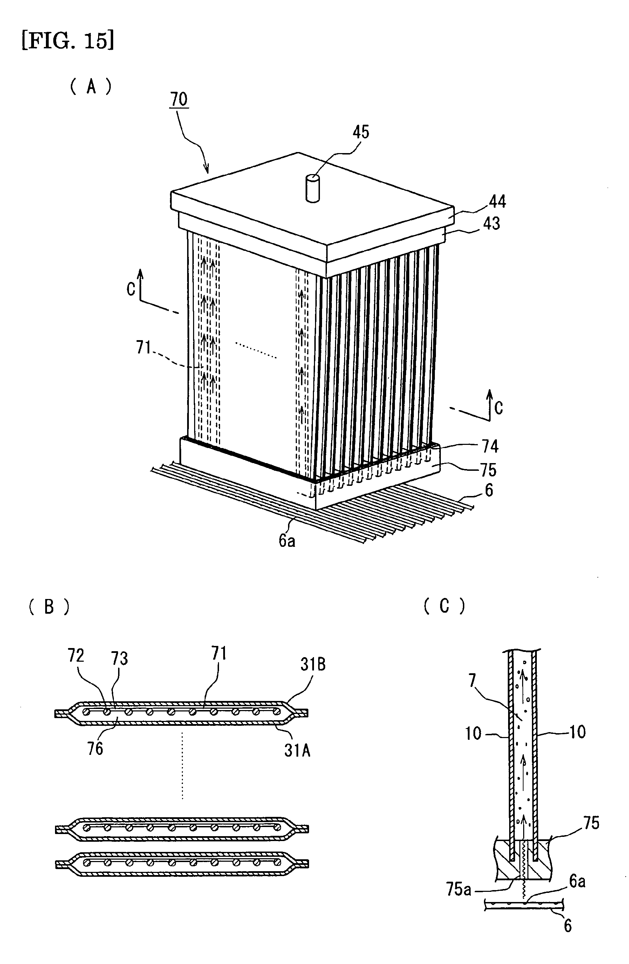

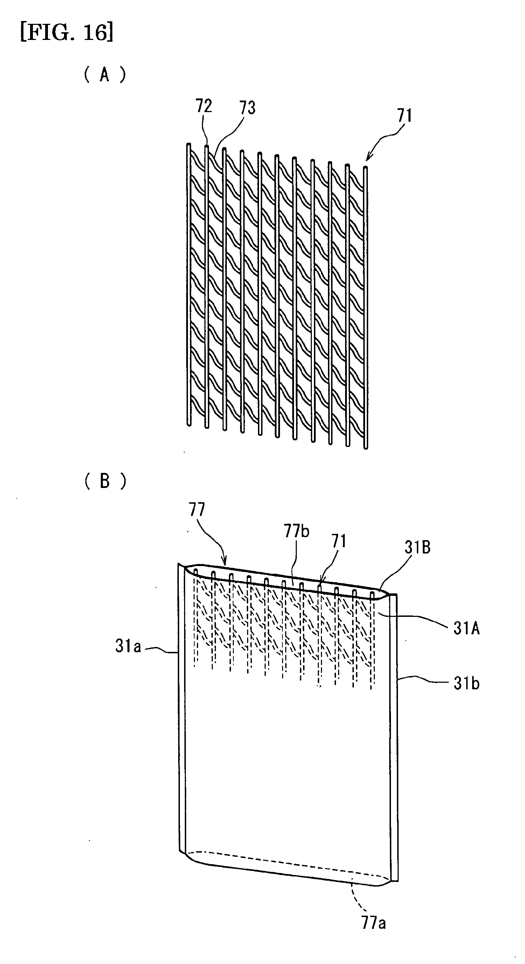

Figures 15(A) to (C) and Figs. 16(A) and (B) show a flat sheet membrane filtration module 70 according to a third embodiment.
The flat sheet membrane filtration module 70 of this embodiment uses a net material 71 as a support material as shown in Fig. 16(A), and a plurality of flat sheet membrane elements 10 are fixed to fixing members 43 and 75 by resin molding.

The net material 71 used includes a plurality of linear resins 72 which are extended in parallel toward the upper side serving as the treated liquid outlet side and which are transversely connected with linear resins 73 finer than the linear resins 72.
The linear resins 72 have a diameter of 0.7 to 5.0 mm, while the linear resins 72 connecting the linear resins 72 have a diameter of 0.3 to 2.0 mm smaller than that of the linear resins 72.
When a commercial product is used as the net material, an extrusion net (Naltex (registered trade name)) N04911/05_45PP or N06066/06_45PP-NAT manufactured by Naltex Corporation is used.

In the flat sheet membrane filtration module 70, the net material 71 is held between the single-layer filtration membranes 31A and 31B composed of the expanded PTFE porous membrane 15, and the right and left both edges 31a and 31b are heat-sealed to form a cylindrical filtration membrane 77.
The lower end opening 77a of the cylindrical filtration membrane 77, which is not heat-sealed, is sealed with a fixing member 75 by molding a resin 74. Similarly, the upper end opening 77b of the cylindrical filtration membrane 77, which is not heat-sealed, is placed in a groove corresponding to the shape of the upper opening 77b as in the fifth embodiment and then heat-fused. The upper opening 77b is communicated with the inside of a collecting header 44, and the collecting header 44 is communicated with a collecting tube 45.

In addition, a through hole 75a is provided in the fixing member 75 at the bottom so as to be disposed between the flat sheet membrane elements, and an aeration tube 6 is disposed below the fixing member 75 so that air ejected from ejection holes 6a provided in the upper surface of the aeration tube 6 is introduced between the flat sheet membrane elements 10 through the through holes 75a. The width of the through holes 75a is preferably 2 mm to 30 mm and particularly preferably 5 mm to 15 mm.
Therefore, bubbles 7 generated by ejecting pressurized air from the ejection holes 6a of the aeration tube 6 are raised in the axial direction while being in contact with the outer surfaces of the flat sheet membrane elements 10 to strongly separate and remove the suspended components which adhere to and deposit on the surfaces of the flat sheet membrane elements 10. In this way, membrane filtration can be stably continued by membrane-isolation activated sludge treatment. The air bubbling may be performed constantly or periodically.

In this configuration, as shown in Fig. 15(B), a space 76 is formed between the filtration membrane 31A and the linear resins 72 of the net material 71, and thus the treated liquid can be securely led to the treated liquid outlet through the space 76. As a result, the treatment flow rate is significantly improved, and thus a support material composed of a thin net material as shown in Fig. 16(A) can be used. Further, flat sheet membrane elements having a large area with the same volume can be arranged, thereby securing a large effective filtration membrane area.

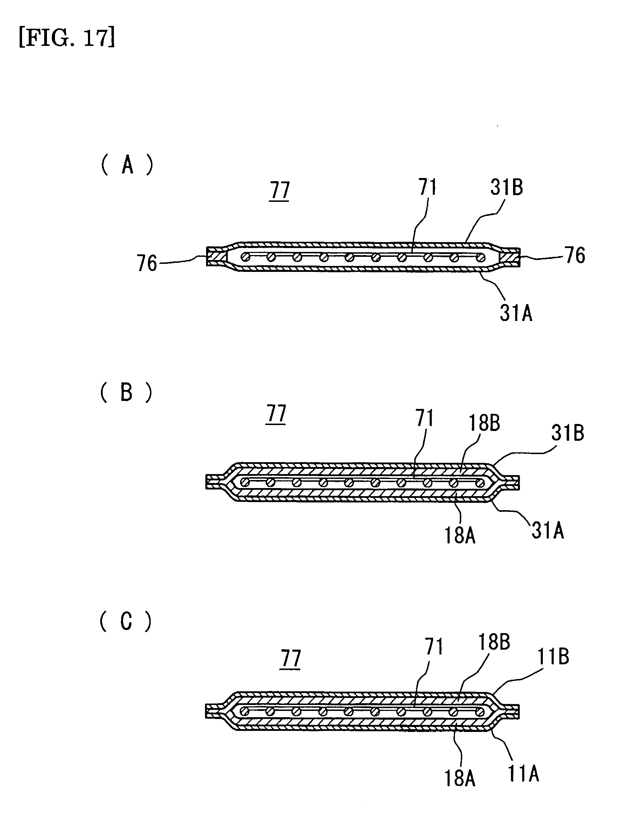

The cylindrical filtration membrane 77 may be configured, for example, as shown in Figs. 17(A) to (C).
In Figure 17(A), the right and left both edges of the filtration membranes 31A and 31B are sealed by fusion of a binder resin 76 which is composed of a film or fine particles and interposed between both edges, not by heat sealing.
As the binder resin 76, a PFA resin or a polypropylene resin having a melting point which is equivalent to or lower than that of the expanded PTFE porous membrane is used.
In Fig. 17(B), polypropylene nonwoven fabrics 18A and 18B having the same size as the filtration membranes 31A and 31B are disposed on the inner sides of the opposing filtration membranes 31A and 31B, respectively, and the both edges are heat-sealed by fusion of the nonwoven fabrics 18A and 18B. In this configuration, the nonwoven fabrics 18A and 18B can protect the filtration membranes 31A and 31B from the net material 71.
In Fig. 17(C), nonwoven fabrics 18A and 18B are previously laminated on the two-layer structure filtration membranes 11A and 11B used in the first embodiment to form laminates, the net material 71 is held between the resultant laminates, and then the right and left both edges are heat-sealed by fusion of the nonwoven fabrics 18A and 18B.

Figures 18(A) and (B) show a flat sheet membrane filtration module 70-2 according to a fourth embodiment.
The flat sheet membrane filtration module 70-2 of this embodiment is different from the third embodiment in that the net materials 71 are disposed outside the filtration membranes 31A and 31B.
The flexure of the filtration membranes 31A and 31B can be regulated by disposing the net materials 71 to hold the filtration membranes 31A and 31B therebetween. In particular, in back washing, the filtration membranes 31A and 31B can be supported by the net materials 71, thereby decreasing the load applied to the filtration membranes 31A and 31B.

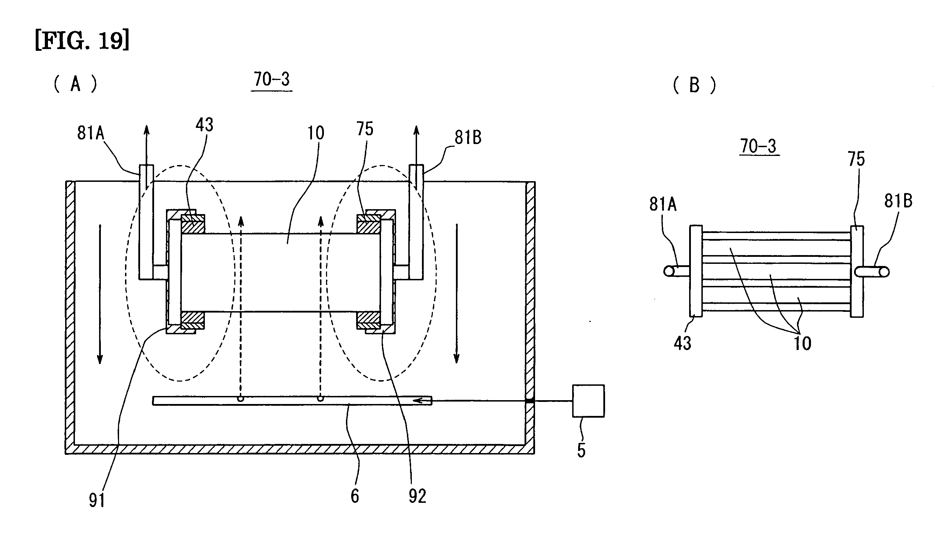

Figures 19(A) and (B) show a flat sheet membrane filtration module 70-3 according to a fifth embodiment.
In this embodiment, instead of providing through holes in the fixing member 75 to dispose them between the flat sheet membrane elements 10, the fixing member 75 having no through hole is rotated by 90°, and the flat sheet membrane elements 10 are arranged, and the fixing members 75 and 43 are disposed at both ends. Further, collecting caps 91 and 92 are respectively attached to the fixing members 43 and 75, and permeated water collecting tubes 81A and 81B are connected to the collecting caps 91 and 92, for collecting water from both ends.
In addition, the collecting tube may be connected to only the fixing member 43 side without being connected to the fixing member 75 side so as to collect water from one of the ends.
As described above, when the flat sheet membrane elements 10 are horizontally arranged, bubbles generated by ejecting air from an aeration tube 6 disposed below the flat sheet membrane elements 10 can be introduced between the flat sheet membrane elements 10 without the through holes provided in the fixing member 75.

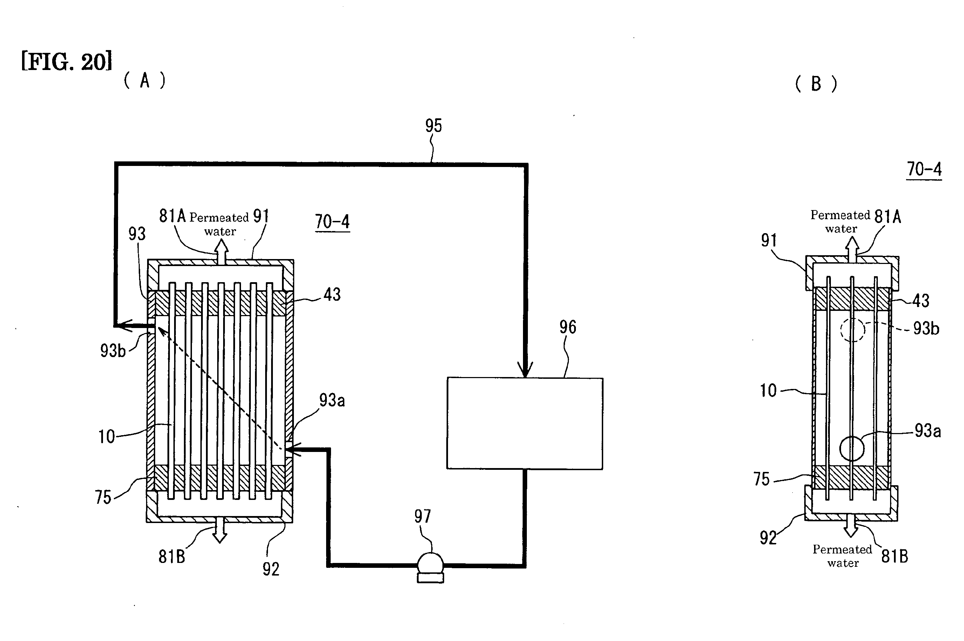

Figures 20(A) and (B) show a flat sheet membrane filtration module 70-4 according to a sixth embodiment.
In this embodiment, flat sheet membrane elements 10 vertically arranged are fixed by fixing members 43 and 75 at the upper and lower both ends, and collecting caps 91 and 92 are attached to the fixing members 43 and 75, respectively. In addition, the flat sheet membrane elements 10 are fixed in an outer casing 93 in a liquid-tight manner. Further, a raw water (untreated water) inlet 93a and a raw water outlet 93b are provided at opposite positions of the outer casing 93.
Further, a circulating pipe 95 is provided to be communicated with the raw water inlet 93a and the raw water outlet 93b, and a raw water tank 96 and a pump 97 are provided in the circulation pipe 95.
Further, collecting tubes 81A and 81B are connected to the collecting caps 91 and 92, respectively.

In this configuration, when the raw water is circulated through the spaces between the flat sheet membrane elements 10 by applying a discharge pressure of the pump 97, the flat sheet membrane elements 10 can be oscillated by the circulating flow of the raw water so that the same function as bubbling by ejection from the aeration tube can be imparted.

In addition, the present invention is not limited to the above-described embodiments and example and includes modifications within a scope equivalent to the scope of the claims.

## Claims

1. A flat sheet membrane element for filtration for performing solid-liquid separation by immersion in a liquid to be treated which contains a suspended component, the membrane element comprising:
sheet-shaped filtration membranes disposed opposite to each other with a space for a treated liquid flow path;
a support portion for securing the space for the treated liquid flow path; and
a peripheral sealing portion for sealing the peripheral edges of the filtration membranes arranged opposite to each other so as to form at least one treated liquid outlet;
wherein the filtration membranes include at least expanded PTFE (polytetrafluoroethylene) porous membranes.

2. The flat sheet membrane element for filtration according to Claim 1,
wherein the expanded PTFE porous membranes constituting the filtration membranes have a mean pore diameter of 0.01 to 5.0 µm, a mean maximum length of 30 µm or less in a fibril skeleton surrounding pores, and a mean thickness of 200 µm or less.

3. The flat sheet membrane element for filtration according to Claim 1 or 2,
wherein each of the filtration membranes includes a single layer of an expanded PTFE porous membrane or a plurality of layers of the expanded PTFE porous membrane and a skin layer provided on the outer surface of the expanded PTFE porous membrane, the skin layer being composed of at least one fluorocarbon resin selected from the group consisting of PTFE, PFA, and FEP and having finer pores than those of the expanded PTFE porous membrane.

4. The flat sheet membrane element for filtration according to any one of Claims 1 to 3, wherein the filtration membranes include two filtration membranes arranged opposite to each other or a filtration membrane folded into two parts.

5. The flat sheet membrane element for filtration according to any one of Claims 1 to 4, wherein the support portion is composed of at least one support material selected from a nonwoven fabric, a perforated sheet, a pleated material having continuing V-shaped bent portions, a net material of a shape in which a plurality of linear portions arranged in parallel toward the treated liquid outlet side are connected in a transverse direction, and a processed plate provided with a plurality of flow path openings communicating with the treated liquid outlet side, and
the support material is composed of at least one material selected from a polyolefin resin, a polyester resin, a fluorocarbon resin, and a metal material coated with a polyolefin resin or a fluorocarbon resin.

6. The flat sheet membrane element for filtration according to Claim 5,
wherein at least one support material is disposed between the inner surfaces of the opposing filtration membranes, which face the space, and the inner surfaces of both filtration membranes are fixed to part or the whole of at least one of the surfaces of the support material to form an integrated laminate.

7. The flat sheet membrane element for filtration according to any one of Claims 1 to 6, wherein the peripheral sealing portion is formed by heat-pressure or laser sealing the peripheral edges of the filtration membranes arranged opposite to each other and the filtration membranes are placed on the support material having the force of holding the planar shape of the filtration membranes.

8. The flat sheet membrane element for filtration according to any one of Claims 1 to 6, wherein the peripheral sealing portion is formed using a peripheral frame, and the peripheral edges of the filtration membranes are fixed to the peripheral frame, leaving the space.

9. The flat sheet membrane element for filtration according to Claim 8,
wherein the peripheral frame is composed of a resin material such as a polyolefin resin or a fluorocarbon resin, or a metal material surface-coated with the polyolefin resin or the fluorocarbon resin.

10. A flat sheet membrane filtration module used for external pressure filtration or immersion-type external pressure sucking filtration, the module comprising the flat sheet membrane element for filtration according to any one of Claims 1 to 9, which is disposed with a space and integrally assembled.

11. The flat sheet membrane filtration module according to Claim 10,
wherein a plurality of the flat sheet membrane elements for filtration are arranged in parallel, a common treated liquid collecting tube is disposed above the elements, and an end of each of branch tubes branched from the common treated liquid collecting tube is connected to the treated liquid outlet provided on the upper surface of each of the flat sheet membrane elements for filtration arranged in parallel so that the flat sheet membrane elements for filtration arranged in parallel are suspended and supported.

12. The flat sheet membrane filtration module according to Claim 10 or 11,
wherein the module is immersed in a storage tank of a liquid to be treated which includes drainage containing activated sludge.

13. The flat sheet membrane filtration module according to Claim 12,
wherein the MLSS (Mixed Liquor Suspended Solids) of the liquid to be treated is 5,000 to 20,000 mg/L.
